# EUROPEAN PATENT APPLICATION

(11) **EP 4 467 692 A1**
(43) Date of publication of application: **27.11.2024**
(21) Application number: 23763378.9
(22) Date of filing: 27.02.2023
(51) Int. Cl.: D01F 9/12, C08K 7/06, F16C 33/20

(54) **CARBON FIBRES FOR SLIDING, AND PRODUCTION METHOD FOR CARBON FIBRES FOR SLIDING**

(30) Priority: 04.03.2022 JP 2022033924
(71) Applicant: Oiles Corporation, Kanagawa 252-0811 (JP)
(72) Inventor: TAKECHI Ryuto, Fujisawa-shi, Kanagawa 252-0811 (JP); SAITO Aoi, Fujisawa-shi, Kanagawa 252-0811 (JP); TAKAHASHI Kohei, Fujisawa-shi, Kanagawa 252-0811 (JP)
(74) Representative: Patentanwälte Bressel und Partner mbB
(86) International application number: PCT/JP2023/006915
(87) International publication number: WO 2023/167119

(57) **Abstract**

Carbon fiber for a sliding material that exhibits satisfactory sliding properties and the like without damaging a mating material when the carbon fiber for a sliding material is produced into a sliding member by predetermined processing by way of a resin composition for a sliding material including a predetermined uncarbonized carbon fiber, and a method for efficiently producing such carbon fiber for a sliding material, are provided.

Disclosed is carbon fiber for a sliding material to be blended into a resin composition for a sliding material that is formed into a sliding member by predetermined processing, in which a 5% weight loss temperature of the carbon fiber for a sliding material as determined by thermogravimetry has a value within a range of 400 to 550°C.

## Description

### TECHNICAL FIELD

The present invention relates to carbon fiber (or fibre) for a sliding material and a method for producing carbon fiber for a sliding material.

More specifically, the invention relates to carbon fiber for a sliding material which, when blended into a resin composition for a sliding material and processed into a sliding member by way of the resin composition, exhibits satisfactory sliding properties and the like without damaging the mating material, and to a method for producing such carbon fiber for a sliding material.

### BACKGROUND ART

Conventional submersible pumps have been used in various use applications such as devices for pumping water from rivers and the sea as well as water circulation and the like in water heaters, floor heating appliances, automobile engines, inverters, batteries, and fuel cells. One example of such submersible pumps (water pumps) includes the following configurations 1) to 5) and is configured to include predetermined sliding members (a slide bearing and a thrust-bearing member) (see, for example, Patent Document 1):
1) an impeller;
2) a shaft for fixing the impeller;
3) a slide bearing fixed to the impeller for supporting the impeller in a freely rotatable manner relative to the shaft;
4) a thrust-bearing member sliding against each end face of the slide bearing; and
5) a casing and a cover housing the impeller and forming a pump chamber.

A slide bearing, which is a sliding member, is a cylindrical-shaped bearing that receives loads at the inner diameter and the end faces and has the same thickness as the end faces, and is an injection molded article derived from a resin composition containing a straight-chained polyphenylene sulfide resin as a base resin.

That is, the slide bearing is an injection molded article derived from a resin composition including carbon fiber and at least one of a polytetrafluoroethylene resin and graphite with respect to a predetermined base resin, and has a feature that the carbon fiber is a carbonized product fired at 1000 to 1500°C.

Furthermore, a sliding member formed using a predetermined uncarbonized carbonaceous fiber, which is different from the uncarbonized carbon fiber as the carbon fiber for a sliding material of the invention, as a reinforcing material has also been proposed (see, for example, Patent Document 2).

More specifically, it is a sliding member formed from a sintered body which has a predetermined shape and is obtained by sintering a composite body composed of the following blending components 1) to 3).

The sliding member is a sliding member containing a predetermined amount of carbon fiber as an uncarbonized carbonaceous fiber, which is obtained by, for example, supplying raw material pitch to a spinning machine, extruding the raw material pitch through a nozzle in a state of being heated to 300°C under pressure of an inert gas to obtain a raw material fiber, and then retaining the obtained raw material fiber in an oxidizing atmosphere at about 150 to 500°C for about 0.5 to 5 hours to be insolubilized.
1) Uncarbonized carbonaceous fiber obtained by a heat treatment at a temperature of 550°C or lower
2) Inorganic powder or inorganic fiber of a boron compound or the like
3) Uncarbonized carbonaceous fiber, and an inorganic powder of a boron compound or the like or carbonaceous powder having self-sinterability in which the inorganic fiber is embedded

An uncarbonized carbonaceous fiber is defined as a carbonaceous fiber that has not been subjected to a carbonization treatment at ordinary temperatures, which may be possibly heat-treated (firing) at a temperature of 550°C or lower and further carbonized.

According to the Examples of Patent Document 2, the composite body composed of the above-described 1) to 3) is all heated to 1000°C in a non-oxidizing atmosphere or a nitrogen gas atmosphere at normal pressure to be subjected to primary sintering, and is further heated to 1300°C, 1700°C, or 2000°C in the same atmosphere to be subjected to secondary sintering. Therefore, the uncarbonized carbonaceous fiber of Patent Document 2 is ultimately heat-treated at a temperature of substantially 1000°C or higher.

### CITATION LIST

### PATENT DOCUMENT

Patent Document 1: JP 6639592 B2 (claims and the like)
Patent Document 2: JP H3-237062 A (claims and the like)

### SUMMARY OF THE INVENTION

### PROBLEM TO BE SOLVED BY THE INVENTION

However, the sliding member (slide bearing or the like) used for the submersible pump (water pump) described in Patent Document 1 uses a carbonized product fired at 1000 to 1500°C as a reinforcing fiber for a predetermined resin.

Therefore, there has been a problem that the mating material is damaged by the carbon fiber (carbonized product) blended therein. This problem remains the same even when a graphitized product fired at 2000°C or higher is used as the carbon fiber.

Avoiding the use of carbon fibers may be considered as a countermeasure; however, in that case, there is a problem that depending on the conditions of usage, the strength of the sliding member (slide bearing) is insufficient, and sufficient wear resistance is not obtained.

Furthermore, with regard to the sliding member described in Patent Document 2, it was necessary to use an uncarbonized carbonaceous fiber obtained by firing at an extremely low temperature, and there was a problem that it is still difficult to obtain satisfactory sliding properties.

That is, for example, it was necessary to use an uncarbonized carbonaceous fiber obtained by extruding raw material pitch through a nozzle at 300 to 400°C under pressure of an inert gas to obtain a raw material fiber, and then retaining the raw material fiber in an oxidizing atmosphere at about 150 to 500°C for about 0.5 to 5 hours.

This is for the purpose of enhancing the interfacial adhesion with a carbonaceous powder having self-sinterability, and ultimately, the desired strength could not be obtained unless primary sintering is performed by heating the uncarbonized carbonaceous fiber to 1000°C in a non-oxidizing atmosphere or a nitrogen gas atmosphere at normal pressure as described above, and secondary sintering is performed by heating the resultant to 1300°C, 1700°C, or 2000°C in the same atmosphere.

In addition, the sliding member described in Patent Document 2 is an invention related to a carbon fiber-reinforced carbon composite material, a so-called C/C composite, and there is no description or consideration on blending the uncarbonized carbonaceous fiber described in Patent Document 2 into a resin composition.

Thus, the inventors conducted an extensive investigation and found that by using an uncarbonized carbon fiber (hereinafter, may be simply referred to as carbon fiber for a sliding material) having a 5% weight loss temperature, which is obtained by thermogravimetry, in a predetermined range under predetermined conditions, as the carbon fiber to be blended into a resin composition for a sliding material, when a sliding member is formed by predetermined processing, the friction coefficient is low while the wear amount is small, and satisfactory sliding properties and the like are obtained, thus completing the invention.

That is, it is an object of the invention to provide carbon fiber for a sliding material which exhibits satisfactory sliding properties and the like without damaging a mating material when the carbon fiber for a sliding material is blended into a resin composition for a sliding material, and the resin composition for a sliding material is formed into a sliding member by predetermined processing, and an efficient method for producing such carbon fiber for a sliding material.

### MEANS FOR SOLVING PROBLEM

According to the invention, carbon fiber for a sliding material to be blended into a resin composition for a sliding material that is formed into a sliding member by predetermined processing, in which a 5% weight loss temperature (hereinafter, may be referred to as TG5) determined by thermogravimetry has a value within a range of 400 to 550°C, is provided, thereby solving the above-mentioned problems.

In this way, by specifying the 5% weight loss temperature determined by thermogravimetry for carbon fiber for a sliding material as an additive to be blended into a resin composition for a sliding material, to a predetermined range, when the carbon fiber for a sliding material is processed into a predetermined sliding member, the sliding member could exhibit satisfactory sliding properties over a long period of time without damaging a mating material (for example, a metal such as stainless steel or an aluminum alloy).

Furthermore, such carbon fiber for a sliding material has excellent uniform miscibility for various resin components and could exhibit satisfactory sliding properties even with a relatively small blending amount.

To speak further, such carbon fiber for a sliding material could exhibit, when blended into a resin composition for a sliding material and processed into a predetermined sliding member, sufficient properties in terms of heat resistance, mechanical strength, low linear expansion coefficient, friction coefficient, wear amount, antistatic properties, and the like could be exhibited.

Furthermore, upon configuring the carbon fiber for a sliding material of the invention, it is preferable that a tensile modulus measured according to JIS R 7606:2000 has a value within a range of 10 to 35 GPa.

In this way, when the tensile modulus of the carbon fiber for a sliding material is specified, and the carbon fiber is blended and then processed into a predetermined sliding member, it is easy to adjust the linear expansion coefficient, friction coefficient, and wear amount to values equal to or less than predetermined values.

Furthermore, upon configuring the carbon fiber for a sliding material of the invention, it is preferable that a tensile elongation measured according to JIS R 7606:2000 has a value within a range of 2 to 5%.

In this way, by specifying the tensile elongation of the carbon fiber for a sliding material, when such carbon fiber for a sliding material is blended to prepare a resin composition for a sliding material and then the resin composition is processed into a predetermined sliding member, the linear expansion coefficient, friction coefficient, and wear amount could be more easily adjusted to values equal to or less than predetermined values, and durability and wear resistance could be improved.

Furthermore, upon configuring the carbon fiber for a sliding material of the invention, it is preferable that a saturated moisture percentage measured according to JIS K 7209:2000 has a value within a range of 1 to 8% by weight.

It is because by specifying the saturated moisture percentage of the carbon fiber for a sliding material in this way, the dimensional change caused by water absorption in a sliding member and the like derived from the carbon fiber for a sliding material is suppressed, and it is easy to maintain dimensional accuracy.

Furthermore, upon configuring the carbon fiber for a sliding material of the invention, it is preferable that an amount of carbon on a surface as determined by XPS elemental analysis has a value within a range of 85 to 96% by weight with respect to a total amount.

In this way, by specifying the amount of carbon on the surface of carbon fiber for a sliding material as determined by XPS elemental analysis, when such carbon fiber for a sliding material is blended to prepare a resin composition for a sliding material and then the resin composition is processed into a predetermined sliding member, the sliding member could exhibit excellent sliding properties over a long period of time in a more quantifiable manner.

Furthermore, upon configuring the carbon fiber for a sliding material of the invention, it is preferable that the volume resistivity has a value within a range of 1×10⁰ to 1×10⁴ ohm·cm.

In this way, by limiting the volume resistivity of the carbon fiber for a sliding material, when such a carbon fiber is blended to prepare a resin composition for a sliding material and then the resin composition is processed into a predetermined sliding member, not only durability and wear resistance but also electrical conductivity and antistatic property could be easily adjusted.

Furthermore, it is preferable that the resin component in the resin composition for a sliding material in which the carbon fiber for a sliding material of the invention is blended, is at least one selected from the group consisting of a polyphenylene sulfide resin, a polyether sulfone resin, a polyether ether ketone resin, a polyimide resin, a polyamide resin, a polyacetal resin, a polytetrafluoroethylene resin, a polyketone resin, a thermosetting phenol resin, an epoxy resin, a melamine resin, a diallyl phthalate resin, and an unsaturated polyester resin.

In this way, by blending a predetermined carbon fiber for a sliding material and then limiting the resin component at the time of preparing the resin composition for a sliding material, when the resin composition is processed into a predetermined sliding member, satisfactory mechanical strength could be obtained, and more excellent durability, wear resistance, and the like could be exhibited.

When a resin composition for a sliding material is prepared by blending the carbon fiber for a sliding material of the invention, the resin composition for a sliding material includes at least blending components (a) to (c), or blending components (a), (b), and (d), or blending components (a) to (d). Here, the blending component (a) is the above-described resin component, the blending component (b) is the carbon fiber for a sliding material of the invention, the blending component (c) is an inorganic material that will be described below, and the blending component (d) is a lubricating additive that will be described below.

In addition, when a polytetrafluoroethylene resin is used as the blending component (a), the lubricating additive as the blending component (d) is not an essential blending component upon configuring the resin composition for a sliding material of the invention and could be omitted.

Another aspect of the invention is a method for producing carbon fiber for a sliding material to be blended into a resin composition for a sliding material, the method including the following steps (1) and (2):
(1) a step of preparing raw material fibers of carbon fiber; and
(2) a firing step of firing the raw material fibers of carbon fiber by setting a firing temperature to a value within a range of 600 to 800°C, and adjusting a 5% weight loss temperature as determined by thermogravimetry of resulting carbon fiber for a sliding material to a value within a range of 400 to 550°C.

By producing carbon fiber for a sliding material having a 5% weight loss temperature (TG5) in a predetermined range easily, stably, and efficiently as an additive to be blended into a resin composition for a sliding material through such steps, when the carbon fiber for a sliding material is processed into a predetermined sliding member by way of a resin composition for a sliding material, the sliding member could exhibit satisfactory sliding properties, wear resistance, and the like over a long period of time without damaging the mating material.

Furthermore, carbon fiber for a sliding material produced in this way has excellent uniform miscibility for various resin components, and could exhibit satisfactory sliding properties, wear resistance, and the like even with a relatively small blending amount.

### BRIEF DESCRIPTION OF DRAWINGS

Figs. 1A to 1C are figures provided to describe the relationships between the firing temperature of carbon fiber and the linear expansion coefficient, the friction coefficient, and the wear amount of a sliding member, respectively;
Fig. 2 is a figure provided to describe the relationship between the firing temperature of carbon fiber and the 5% weight loss temperature (TG5) of carbon fiber;
Figs. 3A and 3B are figures provided to describe the relationships between the firing temperature of carbon fiber and the tensile modulus and the tensile elongation of carbon fiber, respectively;
Fig. 4 is a figure provided to describe the relationship between the firing temperature of carbon fiber and the volume resistivity (logarithmic notation) of carbon fiber;
Figs. 5A to 5C are figures provided to describe the relationships between the blending amount of carbon fiber for a sliding material and the linear expansion coefficient, the friction coefficient, and the wear amount of a sliding member, respectively;
Figs. 6A to 6C are figures provided to describe the relationships between the weight ratio of carbon fiber for a sliding material as the blending component (b)/inorganic material as the blending component (c), and the linear expansion coefficient, the friction coefficient, and the wear amount of a sliding member, respectively; and
Figs. 7A to 7C are figures provided to describe the relationships between the weight ratio of carbon fiber for a sliding material as the blending component (b)/lubricating additive as the blending component (d), and the linear expansion coefficient, the friction coefficient, and the wear amount of a sliding member, respectively.

### MODE(S) FOR CARRYING OUT THE INVENTION

### [First embodiment]

A first embodiment is carbon fiber for a sliding material that is blended into a resin composition for a sliding material to be produced into a sliding member, in which a 5% weight loss temperature determined by thermogravimetry has a value within a range of 400 to 550°C.

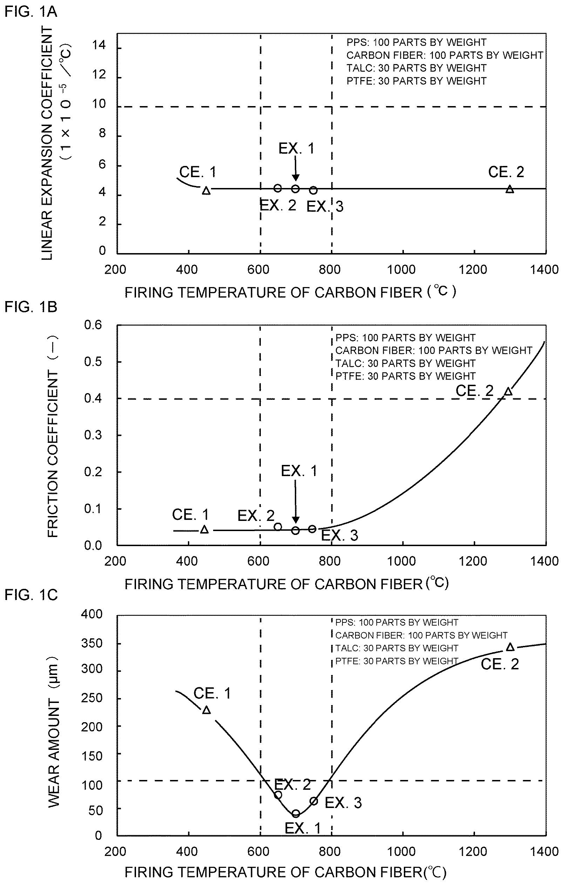

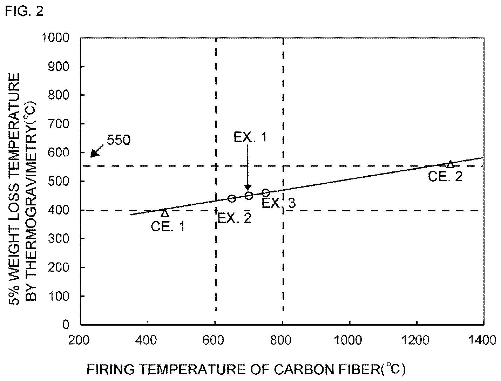

That is, as shown in Figs. 1A to 1C, the carbon fiber for a sliding material of the invention is an uncarbonized carbon fiber whose 5% weight loss temperature (hereinafter, may be simply referred to as TG5), which is measured using a thermogravimetric analyzer (TGA) under predetermined conditions, is within a predetermined range as shown in Fig. 2, so as to control the linear expansion coefficient, the friction coefficient, and the wear amount of a sliding member derived from a resin composition for a sliding material.

Hereinafter, the carbon fiber for a sliding material of the first embodiment will be described more specifically, with reference to the drawings as appropriate.

### 1. Kind

With regard to the kind of the carbon fiber for a sliding material, the 5% weight loss temperature (TG5) measured using a TGA under the conditions of an air flow rate of 100 ml/min and a temperature increase rate of 5°C/min has a value within the range of 400 to 550°C.

The reason for this is that when the TG5 is below 400°C, the heat resistance, mechanical strength, and the like are excessively decreased, and when the carbon fiber for a sliding material is processed into a predetermined sliding member, durability and the like are markedly decreased.

On the other hand, it is because when the TG5 exceeds 550°C, heat resistance, mechanical strength, and the like of the carbon fiber for a sliding material itself are improved; however, when the carbon fiber is processed into a predetermined sliding member, the friction coefficient increases.

Therefore, it is more preferable that the TG5 of the uncarbonized carbon fiber has a value within the range of 430 to 500°C, and even more preferably a value within the range of 450 to 490°C.

The TG5 can be measured from the initial weight (100% by weight) in a weight loss chart obtained using a TGA, by taking the 5% weight loss temperature as a guide.

Here, referring to Fig. 2, the relationship between the firing temperature (°C) of carbon fiber (including carbon fiber for a sliding material and other carbon fiber; hereinafter, the same applies) and the 5% weight loss temperature (TG5) determined by TGA, which is one of thermal decomposition temperatures of carbon fiber, will be described.

That is, the axis of abscissa in Fig. 2 represents the firing temperature (°C) of carbon fiber, and the axis of ordinate represents the value of TG5 (°C) of the carbon fiber.

The characteristic curve in Fig. 2 is based on the results related to the TG5 of the carbon fibers used in Examples 1 to 3 and Comparative Examples 1 and 2, in which only the firing temperature is different, as will be described below.

Further, in the figure, Example 1 is described as EX 1, Comparative Example 1 is described as CE1, and the same applies hereinafter.

As can be understood from the characteristic curve in Fig. 2, as the firing temperature (°C) of the carbon fiber is lower, the value of TG5 tends to decrease slightly.

More specifically, when the firing temperature of the carbon fiber exceeds 1200°C, the TG5 exceeds 550°C; however, when the firing temperature of the carbon fiber is 600 to 800°C, the TG5 has a value within the range of 400 to 550°C, while when the firing temperature of the carbon fiber is below 600°C, the TG5 may be below 400°C.

Therefore, from the results of the characteristic curve shown in Fig. 2, it could be said that by adjusting the firing temperature of the carbon fiber to a predetermined range, even at the firing temperature of uncarbonized carbon fiber, the TG5 of the carbon fiber could be controlled to a temperature at which the carbon fiber exhibits predetermined heat resistance.

With regard to the carbon fiber for a sliding material, basically, the TG5 could be limited to a value within a predetermined range by limiting the firing temperature to be relatively low.

That is, the carbonized product described in Patent Document 1 and the like of the prior art is a carbon fiber fired at least 1000°C or higher, and preferably at 1300 to 1500°C, and it has been separately found that the TG5 exceeds 700°C.

Furthermore, the uncarbonized carbonaceous fiber described in Patent Document 2 of the prior art is fired at a temperature of 500°C or lower; however, it has been separately found that the degree of carbonization is considerably low, and the TG5 is below 400°C.

Therefore, with regard to the kind of the carbon fiber for a sliding material, it could be said that upon producing the carbon fiber for a sliding material, it is usually preferable to set the firing temperature to be within the range of 600 to 800°C.

Therefore, the TG5 of the carbon fiber for a sliding material is higher than that of an uncarbonized carbonaceous fiber fired at a temperature of 500°C or lower but is lower than that of a carbonized product fired at a temperature of 1000°C or higher in terms of the degree of carbonization, and the carbon fiber for a sliding material is a low-temperature carbonized product that is clearly distinguishable from these conventional carbon fibers.

That is, the carbon fiber for a sliding material could be clearly distinguished from uncarbonized carbonaceous fibers (low-temperature carbonized products) and carbonized products because significant differences in properties could be seen in terms of the tensile modulus, tensile elongation, XPS elemental analysis (amount of carbon), volume resistivity, saturated moisture percentage, and the like as will be described below.

In addition, with regard to the carbon fiber for a sliding material, it is preferable that the firing temperature is 0.1 to 20 hours under the above-described predetermined temperature conditions.

The reason for this is that when the firing time is outside the predetermined numerical value range, the carbon fiber could not be obtained as an uncarbonized carbon fiber having desired performance even under predetermined temperature conditions.

More specifically, it is because when the firing time is below 0.1 hours, carbonization may occur insufficiently even under predetermined temperature conditions, and the mechanical strength and wear resistance of the resulting sliding member may be notably decreased.

On the other hand, it is because when the firing time exceeds 20 hours, carbonization may occur excessively even under predetermined temperature conditions, and the friction coefficient may increase.

Therefore, the firing time is more preferably 0.2 to 15 hours, and even more preferably 0.3 to 10 hours.

### 2. Morphology

The average fiber diameter (diameter) of the carbon fiber for a sliding material usually has a value of 30 µm or less, preferably a value within the range of 3 to 25 µm, and more preferably a value within the range of 5 to 20 µm, and the average fiber diameter could be appropriately determined according to the use application, ease of use, and the like.

Similarly, the average length of the carbon fiber for a sliding material usually has a value of 500 µm or less, preferably a value within the range of 50 to 450 µm, and more preferably a value within the range of 100 to 400 µm; however, even this could be appropriately determined according to the use application, ease of use, and the like.

### 3. Tensile modulus

Furthermore, it is preferable that the tensile modulus of the carbon fiber for a sliding material usually has a value within the range of 10 to 35 GPa.

The reason for this is that when the tensile modulus of the carbon fiber for a sliding material has a value below 10 GPa, in a case where the resin composition for a sliding material is processed into a predetermined sliding member, the mechanical strength and wear resistance may be notably decreased.

On the other hand, it is because when the tensile modulus of the carbon fiber for a sliding material exceeds 35 GPa, the friction coefficient of the resulting sliding member may be increased.

Therefore, it is more preferable that the tensile modulus of the carbon fiber for a sliding material has a value within the range of 13 to 30 GPa, and even more preferably a value within the range of 16 to 25 GPa.

The tensile modulus of the carbon fiber for a sliding material can be measured according to JIS R 7606:2000.

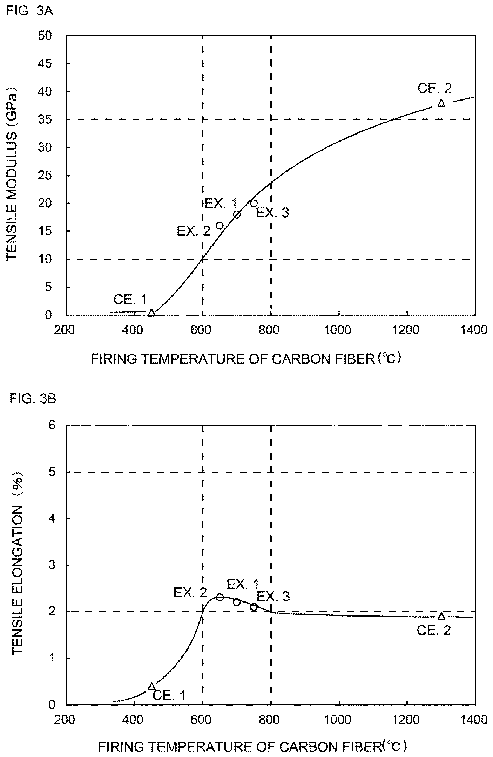

Here, referring to Fig. 3A, the relationship between the firing temperature and the tensile modulus of carbon fiber (including carbon fiber for a sliding material and other carbon fiber) will be described.

That is, the axis of abscissa in Fig. 3A represents the firing temperature (°C) of carbon fiber, and the axis of ordinate represents the value of tensile modulus (GPa) of the carbon fiber.

The characteristic curve in Fig. 3A is based on the tensile moduli of the carbon fibers used in Examples 1 to 3 and Comparative Examples 1 and 2, in which only the firing temperature is different, as will be described below.

As can be understood from the characteristic curve in Fig. 3A, as the firing temperature of carbon fiber is higher, the value of the tensile modulus of the carbon fiber tends to be remarkably high.

More specifically, when the firing temperature of carbon fiber is below 600°C, the tensile modulus is below 10 GPa, and in a case where the firing temperature of carbon fiber is 450°C, the tensile modulus has a considerably low value of below 1 GPa.

Furthermore, it has been found that when the firing temperature of carbon fiber is 600 to 800°C, the tensile modulus obtains a value of at least 10 GPa or more, and when other production conditions (stretching conditions and firing time) and the like are changed, a value of about 35 GPa at the maximum is obtained.

Furthermore, when the firing temperature of carbon fiber exceeds 1200°C, the tensile modulus has a value of above 35 GPa.

Therefore, it could be said that the tensile modulus of carbon fiber could be reliably controlled to a value within a desired range by adjusting the firing temperature of the carbon fiber to a predetermined range.

### 4. Tensile elongation

Furthermore, it is preferable that the tensile elongation of the carbon fiber for a sliding material usually has a value within the range of 2 to 5%.

The reason for this is that when the tensile elongation has a value of below 2%, the friction coefficient of the resulting sliding member may be increased.

On the other hand, it is because when the tensile elongation of the carbon fiber for a sliding material exceeds 5%, in a case where the carbon fiber for a sliding material is processed into a sliding member, the mechanical strength and wear resistance may be notably decreased.

Therefore, it is more preferable that the tensile elongation has a value within the range of 2.1 to 4%, and even more preferably a value within the range of 2.2 to 3%.

The tensile elongation of the carbon fiber for a sliding material can be measured according to JIS R 7606:2000.

Here, referring to Fig. 3B, the relationship between the firing temperature and the tensile elongation of carbon fiber (including carbon fiber for a sliding material and other carbon fiber) will be described.

That is, the axis of abscissa in Fig. 3B represents the firing temperature (°C) of carbon fiber, and the axis of ordinate represents the value of tensile elongation (%) of the carbon fiber.

The characteristic curve in Fig. 3B is based on the tensile elongation of the carbon fibers used in Examples 1 to 3 and Comparative Examples 1 and 2, in which only the firing temperature of the carbon fiber is different, as will be described below.

As can be understood from the characteristic curve described in Fig. 3B, when the firing temperature of carbon fiber is below at least 600°C, as the firing temperature is lower, the value of tensile elongation of the carbon fiber tends to be markedly small.

More specifically, when the firing temperature of carbon fiber is below 600°C, the tensile elongation has a value significantly below 2%.

Furthermore, it has been found that when the firing temperature of carbon fiber is 600 to 800°C, the tensile elongation obtains a value of at least 2% or more, and when other production conditions (stretching conditions and firing time) and the like are changed, a value of 5% at the maximum is obtained.

In addition, when the firing temperature of carbon fiber exceeds 800°C, the tensile elongation has a small value of below 2%.

Therefore, it could be said that the value of tensile elongation of carbon fiber could be accurately controlled to a value within a desired range by adjusting the firing temperature of the carbon fiber to a predetermined range.

### 5. XPS elemental analysis (amount of carbon)

It is preferable that the amount of carbon determined by XPS elemental analysis on the surface of the carbon fiber for a sliding material has a value within the range of 85 to 96% by weight with respect to 100% by weight of the total amount.

The reason for this is that by specifying the amount of carbon to a value within a predetermined range, unlike conventional carbonized products (graphite) and uncarbonized carbonaceous fibers, a resin composition for a sliding material which, when processed into a predetermined sliding member, has a linear expansion coefficient, a friction coefficient, and a wear amount equal to or less than predetermined values, could be provided more easily and stably.

More specifically, it is because when the amount of carbon has a value of below 85% by weight, the mechanical strength, wear resistance, and the like of the resulting sliding member may be notably decreased.

On the other hand, it is because when the amount of carbon determined by XPS elemental analysis has a value exceeding 96% by weight, the friction coefficient may increase.

Therefore, it is more preferable that the amount of carbon has a value within the range of 86 to 95% by weight, and even more preferably a value within the range of 88 to 94% by weight, with respect to the total amount.

The amount of carbon can be measured according to XPS elemental analysis based on a calibration curve of carbon element.

### 6. Volume resistivity

Furthermore, it is preferable that the volume resistivity of the carbon fiber for a sliding material usually has a value within the range of 1×10⁰ to 1×10⁴ ohm·cm.

The reason for this is that by specifying the volume resistivity to a value within a predetermined range, when the carbon fiber for a sliding material is processed into a predetermined sliding member, unlike conventional carbonized products and uncarbonized carbonaceous fibers, a sliding member having excellent electrical insulation properties, antistatic properties, and the like could be more easily and stably provided in a quantifiable manner.

More specifically, it is because when the volume resistivity has a value of below 1×10⁰ ohm·cm, the antistatic properties are improved; however, the electrical insulation properties of the sliding member are insufficient, and there may be problems such as sparks.

On the other hand, it is because when the volume resistivity has a value exceeding 1×10⁴ ohm·cm, the electrical insulation properties are improved; however, in contrast, static electricity may accumulate in the sliding member, and the antistatic properties may be insufficient.

Therefore, it is more preferable that the volume resistivity has a value within the range of 5×10⁰ to 5×10³ ohm·cm, and even more preferably a value within the range of 1×10¹ to 1×10³ ohm·cm.

The volume resistivity can be measured according to a four-terminal method, using a commercially available digital voltmeter or the like.

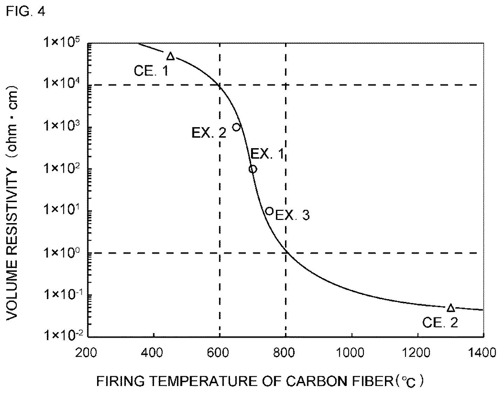

Here, referring to Fig. 4, the relationship between the firing temperature and the volume resistivity of carbon fiber (including carbon fiber for a sliding material and other carbon fiber) will be described.

That is, the axis of abscissa in Fig. 4 represents the firing temperature (°C) of carbon fiber, and the axis of ordinate represents the value of volume resistivity (ohm·cm) of the carbon fiber in logarithmic indication.

The characteristic curve in Fig. 4 is based on the volume resistivity of the carbon fibers used in Examples 1 to 3 and Comparative Examples 1 and 2, in which only the firing temperature for the carbon fiber is different.

As can be understood from the characteristic curve in Fig. 4, as the firing temperature of carbon fiber is higher, the volume resistivity tends to decrease rapidly.

More specifically, when the firing temperature of the carbon fiber is below 600°C, the volume resistivity has a value significantly exceeding 1×10⁴ ohm·cm.

Furthermore, when the firing temperature of the carbon fiber is 600 to 800°C, the volume resistivity is likely to obtain a value within the range of 1×10⁰ to 1×10⁴ ohm·cm.

In addition, when the firing temperature of the carbon fiber exceeds 1200°C, the volume resistivity has a small value of below 1×10⁻¹ ohm·cm.

Therefore, it could be said that the value of the volume resistivity could be accurately controlled to a value within a predetermined range by adjusting the firing temperature of the carbon fiber to a predetermined range, and moreover, handling of the carbon fiber is facilitated, while desired antistatic properties and the like are obtained in a sliding member.

### 7. Saturated moisture percentage

The saturated moisture percentage of the carbon fiber for a sliding material can be measured according to JIS K 7209:2000, in which a method for determining the water absorption rate in plastics is specified; however, it is preferable that the saturated moisture percentage usually has a value within the range of 1 to 8% by weight.

The reason for this is that by specifying the saturated moisture percentage to a value within a predetermined range, when the resin composition for a sliding material is processed into a predetermined sliding member and used as a bearing for a submersible pump or the like, excellent sliding properties and the like are obtained more easily in a quantifiable manner over a long period of time.

More specifically, it is because when the saturated moisture percentage has a value of below 1% by weight, it may be difficult for the sliding member to exhibit excellent sliding properties and the like.

On the other hand, it is because when the saturated moisture percentage has a value of exceeding 8% by weight, the dimensional change caused by water absorption becomes large, and it may be difficult for the sliding member to maintain dimensional accuracy.

Therefore, it is more preferable that the saturated moisture percentage has a value within the range of 1.5 to 7% by weight, and even more preferably a value within the range of 2 to 6% by weight.

The saturated moisture percentage is measured according to JIS K 7209:2000 and can be measured as a ratio of increased weight due to absorbed moisture with respect to the initial weight.

### 8. Blending amount

### (1) Blending amount 1

It is also preferable that in the resin composition for a sliding material, the blending amount of the carbon fiber for a sliding material as the blending component (b) usually has a value within the range of 10 to 400 parts by weight with respect to 100 parts by weight of the resin component as the blending component (a).

The reason for this is that by specifying the blending amount of the carbon fiber for a sliding material as the blending component (b) to a value within a predetermined range, a resin composition for a sliding material which, when processed into a predetermined sliding member, has a friction coefficient, a wear amount, and a linear expansion coefficient equal to or less than predetermined values, could be provided more easily and stably.

More specifically, it is because when the blending amount of the carbon fiber for a sliding material has a value of below 10 parts by weight, when the carbon fiber for a sliding material is processed into a predetermined sliding member, it may be difficult to adjust the value of the linear expansion coefficient to a predetermined range, or the wear resistance may deteriorate, and the wear amount may be increased.

On the other hand, it is because when the blending amount of the carbon fiber for a sliding material has a value of exceeding 400 parts by weight, when the resin composition for a sliding material is processed into a sliding member, it may be difficult to adjust the value of the friction coefficient to be within a predetermined range, or the molding processability at the time of being processed into a sliding member may be notably deteriorated.

Therefore, it is more preferable that the blending amount of the carbon fiber for a sliding material has a value within the range of 30 to 300 parts by weight, and even more preferably a value within the range of 50 to 200 parts by weight.

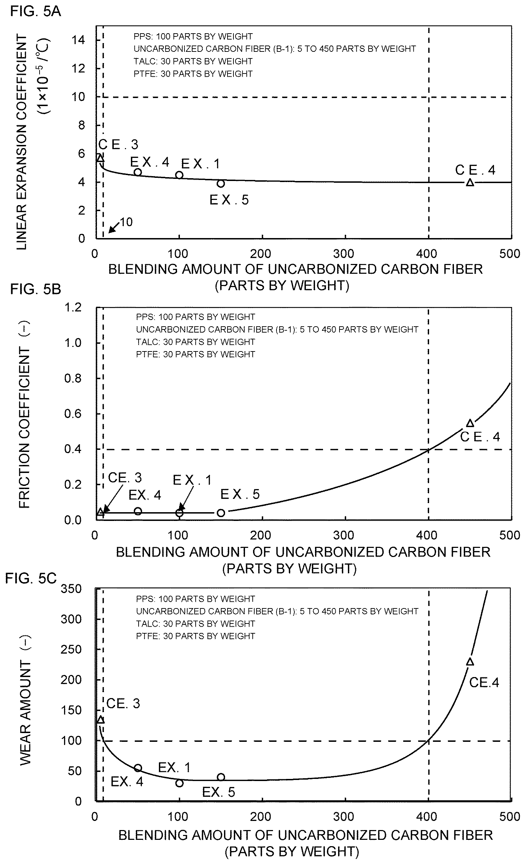

Here, referring to Fig. 5A, the relationship between the blending amount of carbon fiber for a sliding material and the linear expansion coefficient in a case where the carbon fiber for a sliding material is processed into a predetermined sliding member, as measured according to JIS K 7197:2012 (hereinafter, may be simply referred to as linear expansion coefficient), will be described.

That is, the axis of abscissa in Fig. 5A represents the blending amount (parts by weight) of carbon fiber for a sliding material with respect to 100 parts by weight of the resin component as the blending component (a), and the axis of ordinate represents the linear expansion coefficient (1×10⁻⁵/°C) obtained when the resin composition for a sliding material conforming to Example 1 or the like that will be described below is processed into a sliding member.

The characteristic curve in Fig. 5A is based on the results related to the linear expansion coefficients of the sliding members of Examples 1 and 4 to 5 and Comparative Examples 3 and 4, in which the kinds of the blending components (a) to (d) and the blending amounts of the blending components (a), (c), and (d) are the same, and only the blending amount of the blending component (b) is different, as will be described below.

As can be understood from the characteristic curve described in Fig. 5A, it is understood that as the blending amount of the carbon fiber for a sliding material is larger, the linear expansion coefficient tends to be slightly smaller.

More specifically, when the blending amount of the carbon fiber for a sliding material is below 10 parts by weight, the linear expansion coefficient has a value exceeding 5×10⁻⁵/°C; however, when the blending amount is 10 parts by weight or more, the linear expansion coefficient has a value of 5×10⁻⁵/°C or less.

When the blending amount of the carbon fiber for a sliding material exceeds 400 parts by weight, the linear expansion coefficient has a value of about 4×10⁻⁵/°C.

Next, referring to Fig. 5B, the relationship between the blending amount of carbon fiber for a sliding material and the friction coefficient in a case where the carbon fiber for a sliding material is processed into a predetermined sliding member, will be described.

That is, the axis of abscissa in Fig. 5B represents the blending amount (parts by weight) of carbon fiber for a sliding material, and the axis of ordinate represents the friction coefficient (-) obtained when the carbon fiber for a sliding material is processed into a sliding member according to Example 1 that will be described below.

The characteristic curve in Fig. 5B is based on the results related to the friction coefficients of Examples 1 and 4 to 5 and Comparative Examples 3 and 4, as in the case of Fig. 5A.

As can be understood from the characteristic curve described in Fig. 5B, as the blending amount of carbon fiber for a sliding material is larger, the friction coefficient tends to increase.

More specifically, when the blending amount of the carbon fiber for a sliding material as the blending component (b) is within the range of 5 to 150 parts by weight with respect to 100 parts by weight of the resin component as the blending component (a), the friction coefficient obtains a value of about 0.05.

In addition, when the blending amount of the carbon fiber for a sliding material increases, the friction coefficient gradually increases, and when the blending amount exceeds 400 parts by weight, the friction coefficient tends to have a value exceeding 0.4.

Next, referring to Fig. 5(c), the relationship between the blending amount of carbon fiber for a sliding material and the wear amount in a case where the carbon fiber for a sliding material is processed into a predetermined sliding member, will be described.

That is, the axis of abscissa in Fig. 5C represents the blending amount (parts by weight) of carbon fiber for a sliding material, and the axis of ordinate represents the wear amount (µm) under predetermined conditions when the carbon fiber for a sliding material is processed into a sliding member according to Example 1 that will be described below.

The characteristic curve in Fig. 5C is based on the results related to the wear amounts of Examples 1 and 4 to 5 and Comparative Examples 3 and 4, as in the case of Fig. 5A.

As can be understood from the characteristic curve described in Fig. 5C, as the blending amount of carbon fiber for a sliding material becomes larger, the wear amount tends to decrease for the moment and then increase.

More specifically, when the blending amount of the carbon fiber for a sliding material as the blending component (b) is below 10 parts by weight with respect to 100 parts by weight of the resin component as the blending component (a), the wear amount has a value exceeding 100 µm.

Furthermore, when the blending amount of the carbon fiber for a sliding material is in the range of 10 to 400 parts by weight, although some variation is observed depending on various conditions, the wear amount obtains a low value of 100 µm or less.

Therefore, it is understood from Figs. 5A to 5C that by controlling the blending amount of carbon fiber for a sliding material to, for example, a value within the range of 10 to 400 parts by weight, the value of the linear expansion coefficient of the sliding member, and the friction coefficient and the wear amount as sliding properties could be precisely adjusted.

### (2) Blending amount 2

Furthermore, it is also preferable to determine the blending amount of the carbon fiber for a sliding material as the blending component (b) in relation to the blending amount of the inorganic material as the blending component (c) .

More specifically, it is preferable that the weight ratio of blending component (b)/blending component (c) (hereinafter, may be simply referred to as ratio of blending amounts b/c) has a value within the range of 1/1 to 10/1.

The reason for this is that by limiting the ratio of blending amounts b/c for a resin composition for a sliding material, when the resin composition is processed into a sliding member, the linear expansion coefficient, the friction coefficient, and the wear amount could be adjusted to values equal to or less than predetermined values.

More specifically, it is because when the ratio of blending amounts b/c has a value of below 1/1, when the resin composition for a sliding material is processed into a sliding member, it may be difficult to adjust the wear amount and the like to predetermined numerical value ranges.

On the other hand, it is because when the ratio of blending amounts b/c has a value exceeding 10/1, it may be difficult to adjust the friction coefficient, the wear amount, and the like to predetermined numerical value ranges.

Therefore, it is more preferable that the ratio of blending amounts b/c has a value within the range of 1.5/1 to 8/1, and even more preferably a value within the range of 2/1 to 6/1.

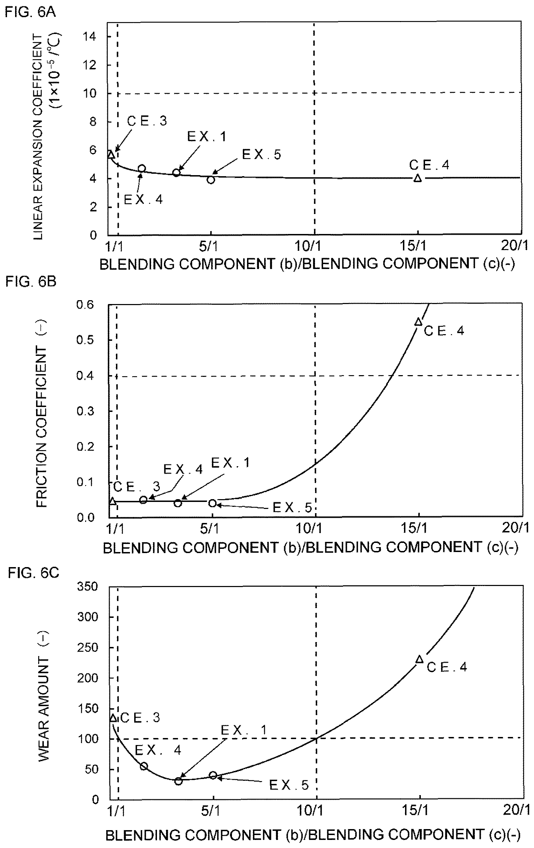

Here, referring to Fig. 6A, the relationship between the ratio of blending amounts b/c and the linear expansion coefficient will be described in relation to the blending amount of the carbon fiber for a sliding material.

That is, the axis of abscissa in Fig. 6A represents the blending component (b)/blending component (c) (-), which is the ratio of blending amounts, and the axis of ordinate represents the linear expansion coefficient (1×10⁻⁵/°C) obtained when the resin composition for a sliding material is processed into a sliding member according to Example 1 that will be described below.

As will be described below, each data of the characteristic curve in Fig. 6A is based on the results related to the linear expansion coefficients of Examples 1 and 4 to 5 and Comparative Examples 3 and 4, in which the kinds of the blending components (a) to (d) and the blending amounts of the blending components (a) and (c) to (d) are the same, and only the blending amount of the blending component (b) is different.

As can be understood from the characteristic curve in Fig. 6A, as the value of the ratio of blending amounts b/c is larger, the linear expansion coefficient tends to be decreased and stabilized.

More specifically, when the ratio of blending amounts b/c is near 0/1, the linear expansion coefficient has a value exceeding 5×10⁻⁵/°C, and when the ratio of blending amounts b/c is about 1/1, the linear expansion coefficient is below 5×10⁻⁵/°C.

Furthermore, when the ratio of blending amounts b/c is about 10/1, the linear expansion coefficient obtains a value of about 4×10⁻⁵/°C.

Referring to Fig. 6B, the relationship between the ratio of blending amounts b/c and the friction coefficient in a case where the resin composition for a sliding material is processed into a predetermined sliding member will be described in relation to the blending amount of the carbon fiber for a sliding material.

That is, the axis of abscissa in Fig. 6B represents the blending component (b)/blending component (c) (-), which is the ratio of blending amounts, and the axis of ordinate represents the friction coefficient (-) obtained when the resin composition for a sliding material is processed into a sliding member according to Example 1 that will be described below.

Each data of the characteristic curve in Fig. 6B is based on the friction coefficients of Examples 1 and 4 to 5 and Comparative Examples 3 and 4, as in the case of Fig. 6A.

As can be understood from the characteristic curve in Fig. 6B, as the ratio of blending amounts b/c is larger, the friction coefficient tends to increase.

More specifically, until the ratio of blending amounts b/c reaches near 0/1 to near 5/1, the friction coefficient is about 0.05; however, when the ratio of blending amounts b/c gradually increases thereafter and exceeds 10/1, the friction coefficient obtains a value exceeding 0.1, and when the ratio of blending amounts b/c is near 15/1, the friction coefficient obtains a value exceeding 0.5.

Referring to Fig. 6C, the relationship between the ratio of blending amounts b/c and the wear amount in a case where the resin composition for a sliding material is processed into a sliding member will be described in relation to the blending amount of the carbon fiber for a sliding material.

That is, the axis of abscissa in Fig. 6C represents the blending component (b)/blending component (c) (-), which is the ratio of blending amounts, and the axis of ordinate represents the wear amount (µm) under predetermined conditions when the resin composition for a sliding material is processed into a sliding member according to Example 1 that will be described below.

Each data of the characteristic curve in Fig. 6C is based on the wear amounts of the sliding members of Examples 1 and 4 to 5 and Comparative Examples 3 and 4, as in the case of Fig. 6A.

As can be understood from the characteristic curve in Fig. 6C, as the ratio of blending amounts b/c increases, the wear amount tends to decrease for the moment and then increase.

More specifically, when the ratio of blending amounts b/c is near 0/1, the wear amount has a value exceeding 100 µm; however, when the ratio of blending amounts b/c is about 1/1, the wear amount decreases to become 100 µm or less, and when the ratio of blending amounts b/c exceeds 10/1, the wear amount increases to have a value exceeding 100 µm.

Therefore, from Figs. 6A to 6C, it is understood that when the ratio of blending amounts b/c has, for example, a value within the range of 1/1 to 10/1, the linear expansion coefficient of the sliding member, and the friction coefficient and the wear amount as sliding properties could be adjusted more precisely.

### (3) Blending amount 3

Furthermore, it is also preferable that the blending amount of the carbon fiber for a sliding material as the blending component (b) is determined by the relationship with the blending amount of the lubricating additive of the blending component (d).

More specifically, it is preferable that the weight ratio of blending component (b)/blending component (d) (hereinafter, may be simply referred to as ratio of blending amounts b/d) has a value within the range of 1/1 to 10/1.

The reason for this is that by limiting the ratio of blending amounts b/d in a resin composition for a sliding material, when the resin composition is processed into a sliding member, the linear expansion coefficient, the friction coefficient, and the wear amount could be more easily adjusted to values equal to or less than predetermined values.

More specifically, it is because when the ratio of blending amounts b/d has a value of below 1/1, when the resin composition for a sliding material is processed into a sliding member, it may be difficult to adjust the wear amount and the like to predetermined numerical value ranges.

On the other hand, it is because when the ratio of blending amounts b/d has a value exceeding 10/1, it may be difficult to adjust the friction coefficient, the wear amount, and the like to predetermined numerical value ranges.

Therefore, it is more preferable that the ratio of blending amounts b/d has a value within the range of 1.5/1 to 8/1, and even more preferably a value within the range of 2/1 to 6/1.

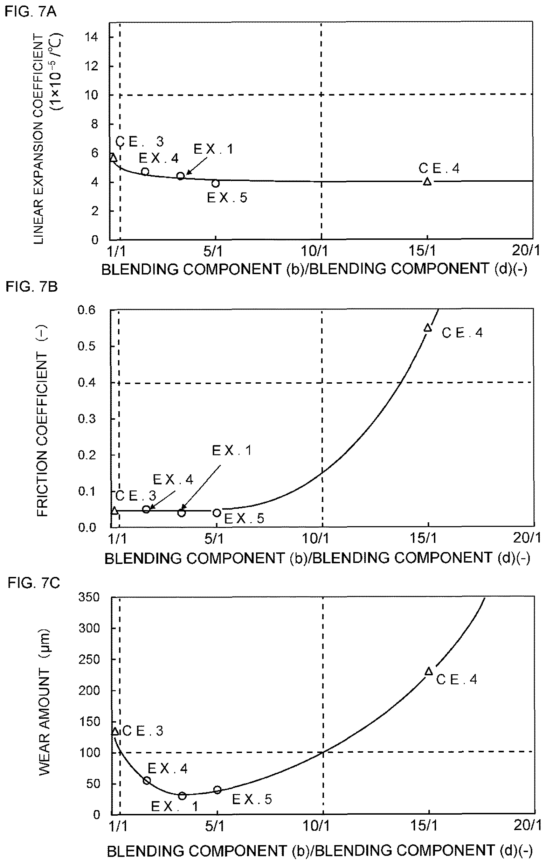

Here, referring to Fig. 7A, the relationship between the ratio of blending amounts b/d and the linear expansion coefficient will be described in relation to the blending amount of the carbon fiber for a sliding material.

That is, the axis of abscissa in Fig. 7A represents the blending component (b)/blending component (d) (-), which is the ratio of blending amounts, and the axis of ordinate represents the linear expansion coefficient (1×10⁻⁵/°C) when the resin composition for a sliding material is processed into a sliding member according to Example 1 that will be described below.

Further, each data of the characteristic curve in Fig. 7A is based on the results related to the linear expansion coefficients of the sliding members of Examples 1 and 4 to 5 and Comparative Examples 3 and 4, in which the kinds of the blending components (a) to (d) and the blending amounts of the blending components (a), (c), (c), and (d) are the same, while only the blending amount of the blending component (b) is different, as will be described below.

As can be understood from the characteristic curve in Fig. 7A, as the value of the ratio of blending amounts b/d is larger, the linear expansion coefficient tends to be decreased and stabilized.

More specifically, when the ratio of blending amounts b/d is near 0/1, the linear expansion coefficient has a value exceeding 5×10⁻⁵/°C; however, when the ratio of blending amounts b/d is 1/1 or more, the linear expansion coefficient is 5×10⁻⁵/°C or less.

Furthermore, when the ratio of blending amounts b/d is about 10/1, the linear expansion coefficient acquires a value of about 4×10⁻⁵/°C.

Furthermore, referring to Fig. 7B, the relationship between the ratio of blending amounts b/d and the friction coefficient in a case where carbon fiber for a sliding material is processed into a predetermined sliding member will be described in relation to the blending amount of the carbon fiber for a sliding material.

That is, the axis of abscissa in Fig. 7B represents the blending component (b)/blending component (d) (-), which is the ratio of blending amounts, and the axis of ordinate represents the friction coefficient (-) when the resin composition for a sliding material is processed into a predetermined sliding member according to Example 1 that will be described below.

Further, each data of the characteristic curve in Fig. 7B is based on the results related to the friction coefficients of the sliding members of Examples 1 and 4 to 5 and Comparative Examples 3 and 4, as in the case of Fig. 7A.

As can be understood from the characteristic curve in Fig. 7B, as the ratio of blending amounts b/d is larger, the friction coefficient tends to be significantly increased.

More specifically, when the ratio of blending amounts b/d is near 0/1 to near 5/1, the friction coefficient is about 0.05; however, even when the ratio of blending amounts b/d is about 10/1, the friction coefficient acquires a value of below 0.2.

Furthermore, referring to Fig. 7C, the relationship between the ratio of blending amounts b/d and the wear amount in a case where carbon fiber for a sliding material is processed into a predetermined sliding member will be described in relation to the blending amount of the carbon fiber for a sliding material.

That is, the axis of abscissa in Fig. 7C represents the blending component (b)/blending component (d) (-), which is the ratio of blending amounts, and the axis of ordinate represents the wear amount (µm) under predetermined conditions when the resin composition for a sliding material is processed into a predetermined sliding member according to Example 1 that will be described below.

Each data of the characteristic curve in Fig. 7C is based on the results related to the wear amounts of the sliding members of Examples 1 and 4 to 5 and Comparative Examples 3 and 4, as in the case of Fig. 7A.

As can be understood from the characteristic curve in Fig. 7C, as the ratio of blending amounts b/d increases, the wear amount tends to decrease for the moment and then increase.

More specifically, when the ratio of blending amounts b/d is near 0/1, the wear amount has a value exceeding 100 µm; however, when the ratio of blending amounts b/d is about 1/1, the wear amount decreases to become 100 µm or less, and when the ratio of blending amounts b/d exceeds 10/1, the wear amount increases to have a value exceeding 100 µm.

Therefore, it is understood from Figs. 7A to 7C that when the ratio of blending amounts b/d has, for example, a value within the range of 1/1 to 10/1, the linear expansion coefficient of a sliding member and the friction coefficient and the wear amount as sliding properties could be adjusted more precisely.

### [Second embodiment]

A second embodiment is a method for producing carbon fiber for a sliding material to be blended into a resin composition for a sliding material, the method including the following steps (1) and (2):
(1) a step of preparing a raw material fiber of carbon fiber; and
(2) a firing step of firing the raw material fiber of carbon fiber at a firing temperature having a value within a range of 600 to 800°C, and adjusting a 5% weight loss temperature of a resulting carbon fiber for a sliding material as determined by thermogravimetry to a value within a range of 400 to 550°C.

Carbon fiber for a sliding material having a 5% weight loss temperature (TG5) in a predetermined range could be produced easily, stably, and efficiently by such steps, and as a result, when the carbon fiber for a sliding material is processed into a sliding member by way of a resin composition for a sliding material, the sliding member could exhibit satisfactory sliding properties, wear resistance, and the like over a long period of time.

Furthermore, when carbon fiber for a sliding material produced in this way is used, various properties (linear expansion coefficient, tensile modulus, tensile elongation, friction coefficient, and the like) of the carbon fiber itself could be easily adjusted, and when a predetermined amount of the carbon fiber for a sliding material is blended and processed into a sliding member, the sliding member could exhibit satisfactory sliding properties, wear resistance, and the like for a long period of time.

### 1. Step 1

### (1) Raw material fiber selection step

Step 1 is a step of preparing a raw material fiber of carbon fiber.

As a first stage, examples of the raw material of carbon fiber before firing or the like include an isotropic pitch material and a PAN material, and step 1 is a step of selecting those as necessary and melt-spinning the raw material.

### (2) Melt-spinning step

### 1) Step of melt-spinning isotropic pitch material

An isotropic pitch material is produced according to a known production method; however, the isotropic pitch material is usually produced using pitch obtained from petroleum or coal, as it is as a raw material.

Therefore, by using ethylene bottom oil (petroleum-based) derived from naphtha, coal tar (coal-based), or the like as a starting raw material, the isotropic pitch material is subjected to removal of low-boiling point components and weight increase by heat treatment, and pitch suitable for spinning could be obtained.

However, it is preferable to take measures such as introducing oxygen bridges so that a graphite crystal structure does not develop during the heat treatment.

Next, it is preferable that the obtained pitch is discharged through a nozzle having a large number of fine holes and formed into fiber.

Next, it is preferable that the fiber is washed with water and stretched, subjected to oil agent adhesion and a drying treatment, heated usually at 200 to 300°C, subjected to an insolubilization treatment, and further stretched to obtain raw material fiber made of an isotropic pitch material.

In the case of spinning an isotropic pitch material, it is usually preferable to employ a short fiber continuous spinning method.

To speak further, in the case of spinning an isotropic pitch material, it is also preferable to employ a vortex method in which a spiral air current is generated in the vicinity of a spinning nozzle, and the isotropic pitch material is stretched by a swirling force.

### 3) PAN material melt-spinning method

In addition, it is also preferable to produce a PAN material according to a known production method.

Therefore, it is preferable that first, monomeric acrylonitrile (AN) is dissolved in a solvent, a polymerization catalyst and the like are added thereto, and then the mixture is heated at a predetermined temperature for a predetermined time to obtain polyacrylonitrile (PAN) having a high molecular weight.

Next, it is preferable that the obtained PAN Is discharged through a nozzle having a large number of fine holes to obtain fiber, and next, the fiber is washed with water, subjected to primary stretching, subjected to oil agent adhesion and drying treatment, and subjected to secondary stretching to produce PAN fiber.

### 2. Step 2

### (1) Isotropic pitch material carbonization step/graphitization step

It is preferable that the spun isotropic pitch material is used and heat-treated usually in a carbonization furnace at 1000 to 1300°C in an inert gas atmosphere, to carbonize the isotropic pitch material.

Next, it is preferable that the isotropic pitch material is heat-treated in a graphite furnace at 2000 to 3000°C in an inert gas atmosphere to perform graphitization.

However, in the case of the invention, a graphitization step is not carried out, and only a carbonization step (firing step) is carried out at 600 to 800°C.

Then, it is important to adjust the 5% weight loss temperature of the obtained carbon fiber for a sliding material as determined by thermogravimetry to a value within the range of 400 to 550°C.

### (2) PAN material carbonization step/graphitization step

In the case of a spun PAN material, first, a flameproofing step is carried out.

Therefore, it is preferable that the spun PAN material is heat-treated at 200 to 300°C in an air atmosphere while being continuously passed through a flameproofing furnace, and the spun PAN material is converted to flameproof fiber that does not melt even at high temperatures, to obtain flameproof fiber.

Next, it is preferable that in the carbonization step, the obtained flameproof fiber is heat-treated at 1000 to 1500°C in an inert gas atmosphere (nitrogen gas atmosphere) while being continuously passed through a carbonizing furnace, to be converted to carbonized carbon fiber.

In addition, it is preferable that a PAN material is heat-treated in a graphite furnace at 2000 to 3000°C in an inert gas atmosphere, and graphitization is performed.

However, in the case of the invention, the graphitization step is not carried out, and only the carbonization step (firing step) is carried out at 600 to 800°C.

Further, it is important to adjust the 5% weight loss temperature of the obtained carbon fiber for a sliding material as determined by thermogravimetry, to a value within the range of 400 to 550°C.

### [Third embodiment]

A third embodiment is a resin composition for a sliding material including carbon fiber for a sliding material that is blended into the resin composition for a sliding material for producing a sliding member by predetermined processing, the carbon fiber for a sliding material having a 5% weight loss temperature having a value within the range of 400 to 550°C as determined by thermogravimetry, in which the resin composition for a sliding material includes at least blending components (a) to (c) or blending components (a), (b), (d), or (a) to (d):
(a) 100 parts by weight of a resin component;
(b) 10 to 400 parts by weight of uncarbonized carbon fiber having a 5% weight loss temperature of 400 to 550°C;
(c) 10 to 80 parts by weight of an inorganic material; and
(d) 10 to 80 parts by weight of a lubricating additive.

### 1. Blending component (a)

### (1) Kind

The kind of the resin component as the blending component (a) is not particularly limited, and any known resin component used for sliding members could be suitably used.

More specifically, among known resin components, the resin component is preferably at least one heat-resistant resin selected from the group consisting of a polyphenylene sulfide resin (PPS), a polyether sulfone resin (PES), a polyether ether ketone resin (PEEK), a polyimide resin (PI), a polyamide resin (PA), a polyacetal resin (POM), a polytetrafluoroethylene resin (PTFE), a polyketone resin (PK), a thermosetting phenol resin (PF), an epoxy resin (EP), a melamine resin (MF), a diallyl phthalate resin (PDAP), and an unsaturated polyester resin (UP).

The reason for this is that by limiting the resin component when a predetermined carbon fiber for a sliding material is blended to prepare a resin composition for a sliding material, in a case where the resin composition for a sliding material is processed into a predetermined sliding member, satisfactory mechanical strength could be obtained, and more excellent durability, wear resistance, and the like could be exhibited.

Furthermore, particularly among the above-described resin components, a polyphenylene sulfide resin, a polyether ether ketone resin, a polyether sulfone resin, a polyamide resin, and a polyacetal resin are more preferable.

The resin component (heat-resistant resin) as the blending component (a) may be used as a main component, and as a guideline, for example, the content of the resin component is preferably 50% by weight or more, more preferably 70% by weight or more, and even more preferably 90% by weight or more, when the total amount of the resin component is taken as 100% by weight.

Furthermore, among these heat-resistant resins as the blending component (a), a polyphenylene sulfide resin (also including modified polyphenylene sulfide resins; hereinafter, may be simply referred to as PPS resin) is the most suitable resin component.

The reason for this is that a PPS resin is usually a crystalline, semi-transparent thermoplastic resin and usually has a high melting point of about 280°C and a high glass transition point of 93°C as well as extremely high rigidity, excellent heat resistance, dimensional stability, wear resistance, low water absorbency, and the like.

Furthermore, it is because a PPS resin has low melt viscosity and has excellent productivity from the viewpoint that large quantities of uncarbonized carbon fiber and inorganic materials could be added.

In addition, it is because PPS resins are available as a crosslinked polymer, a linear polymer, and a semi-linear polymer depending on their molecular structures, and each kind of PPS could be suitably used singly or in combination of two or more kinds thereof.

Among PPS resins, particularly a tough linear kind is preferred in order to produce a slide bearing that takes into consideration of abrasive wear modes such as a water-depleted state in which no water film is formed, and a state in which foreign matter is caught between the bearings.

Furthermore, when a polyamide resin is used as the blending component (a), the polyamide resin is preferably at least one resin selected from the group consisting of PA6 (polyamide 6; hereinafter, will be indicated as abbreviations in the same manner), PA11, PA12, PA66, PA610, PA4T, PA6T, PA6I, PA9T, PA10T, and PAM5T.

### (2) Blending amount

The blending amount of the resin component as the blending component (a) could be determined while taking into consideration of the heat resistance, moldability, mechanical strength, and the like of the resulting sliding member; however, usually, it is preferable that the blending amount of the blending component (a) has a value within the range of 10 to 80% by weight when the total amount (100% by weight) of the resin composition for a sliding material is taken.

The reason for this is that when the blending amount of the blending component (a) is below 10% by weight, as the blending amounts of uncarbonized carbon fiber (for example, a product fired at 600 to 800°C) as the blending component (b) and an inorganic material (talc or the like) as the blending component (c) become large, the melt viscosity of the resin composition for a sliding material becomes excessively high, molding processability is deteriorated, and it may be difficult to obtain a sliding member that exhibits excellent sliding properties and the like.

On the other hand, it is because when the blending amount of the blending component (a) is above 80% by weight, the blending amounts of uncarbonized carbon fiber as the blending component (b) and an inorganic material as the blending component (c) are reduced, so that it may be difficult to adjust the linear expansion coefficient of the resulting sliding member, or the mechanical strength and the like may be notably decreased, and thus there are occasions in which excellent sliding properties could not be exhibited.

Therefore, it is more preferable that the blending amount of the blending component (a) has a value within the range of 15 to 60% by weight, and even more preferably a value within the range of 20 to 40% by weight, with respect to the total amount of the resin composition for a sliding material.

### 2. Blending component (b)

The same content as that related to the carbon fiber for a sliding material described in the first embodiment could be applied, and therefore, overlapping description will not be given here again.

### 3. Blending component (c)

### (1) Kind

It is preferable that a predetermined amount of an inorganic material as the blending component (c) is blended, and that the mechanical strength and heat resistance, more particularly sliding properties, surface smoothness, and the like are improved in a sliding member obtained by subjecting the resin composition for a sliding material to predetermined processing.

Therefore, the kind of the inorganic material is not particularly limited; however, it is preferable to blend an inorganic material having a Mohs hardness of 6 or less.

More specifically, it is preferable to blend at least one of mica, talc, graphite, gypsum, kaolinite, zinc oxide, titanium oxide, zirconium oxide, and the like.

The reason for this is that since these inorganic materials have low hardness such as a Mohs hardness of 6 or less, when the resin composition for a sliding material is processed into a sliding member, the sliding resistance against the mating material could be reduced, and the friction coefficient could be kept low.

Furthermore, among these inorganic materials, talc, mica, graphite, gypsum, kaolinite, or a mixture thereof (for example, mixing weight ratio of talc/mica: 90/10 to 10/90), all of which have a Mohs hardness of below 4, is more suitable from the viewpoint that satisfactory sliding properties and the like could be exhibited even when the blending amount is a relatively small amount.

To speak further, when the blending component (c) is talc (mineral containing hydrous magnesium silicate: Mg₃Si₄O₁₀(OH)₂ as a main component), it is suitable from the viewpoint that the blending component (c) is relatively inexpensive and could be uniformly mixed with the resin component as the blending component (a).

Furthermore, when the blending component (c) is talc or the above-mentioned mixture of talc/mica, the apparent density is relatively uniform, and the value thereof is relatively low.

More specifically, in the case of talc or the like, it is preferable that the apparent density measured according to JIS K 5101-12:2004 has a value within the range of 0.1 to 0.8 g/ml, more preferably a value within the range of 0.2 to 0.7 g/ml, and even more preferably a value within the range of 0.3 to 0.6 g/ml.

In addition, it could be said that these inorganic materials are more suitable from the viewpoint that even when a sliding member is produced by injection molding, compression molding, or the like, a smooth surface is obtained without interfering with predetermined fluidity.

### (2) Blending amount

Furthermore, the blending amount of the inorganic material as the blending component (c) usually has a value within the range of 10 to 80 parts by weight with respect to 100 parts by weight of the resin component as the blending component (a).

The reason for this is that when the blending amount of the blending component (c) has a value of below 10 parts by weight, when the resin composition for a sliding material is processed into a sliding member, the sliding properties and durability may be notably deteriorated.

On the other hand, it is because when the blending amount of the blending component (c) has a value exceeding 80 parts by weight, the melt viscosity of the resin composition for a sliding material increases, and the molding processability at the time of being processed into a sliding member may be notably deteriorated.

Therefore, it is more preferable that the blending amount of the blending component (c) has a value within the range of 15 to 60 parts by weight, and even more preferably a value within the range of 20 to 50 parts by weight, with respect to 100 parts by weight of the resin component as the blending component (a).

### 4. Blending component (d)

### (1) Kind

Furthermore, it is preferable that a lubricating additive that is a compound different from the resin component of the blending component (a) and exhibits a lubricating effect, is blended as the blending component (d) .

The reason for this is that by blending such a lubricating additive, together with the blending components (a) and (b) or the blending components (a) to (c) that constitute the resin composition for a sliding material, the lubricating additive could notably improve the sliding properties and the like in a sliding member obtained by processing.

The kind of the lubricating additive is not particularly limited as long as it is a compound that exhibits a predetermined lubricating effect; however, it is preferable that the lubricating additive is at least one of polytetrafluoroethylene (PTFE), perfluoroalkoxyalkane (PFA), an ethylene-tetrafluoroethylene copolymer (ETFE), a perfluoroethylene-propene copolymer (FEP), polyvinylidene fluoride (PVDF), silicone grease, silicone oil, silicone compound, and the like.

It is because PTFE or the like in particular has a low friction coefficient and could also exhibit satisfactory wear resistance. Furthermore, it is because PTFE or the like could be uniformly mixed and dispersed in, for example, a PPS resin as the resin component of the blending component (a), even when a blending amount in a relatively wide range is used.

That is, in a case where PTFE or the like is used, it is preferable that the average particle size (D50 according to a laser diffraction method) has a value within the range of 1 to 50 µm, more preferably a value within the range of 3 to 20 µm, and even more preferably a value within the range of 5 to 10 µm.

### (2) Blending amount

Furthermore, the blending amount of the lubricating additive as the blending component (d) usually has a value within the range of 10 to 80 parts by weight with respect to 100 parts by weight of the resin component as the blending component (a).

The reason for this is that when the blending amount of the blending component (d) has a value of below 10 parts by weight, even when the blending component (d) is added to a resin composition for a sliding material, an additive effect of imparting lubricity may not be exhibited.

On the other hand, it is because when the blending amount of the blending component (d) has a value exceeding 80 parts by weight, it may be difficult to adjust the linear expansion coefficient or the like in a lubricating component obtained by processing, to a value equal to or less than a predetermined value.

Therefore, it is more preferable that the blending amount of the blending component (d) has a value within the range of 15 to 60 parts by weight, and even more preferably a value within the range of 20 to 40 parts by weight, with respect to 100 parts by weight of the resin component as the blending component (a).

### 5. Other blending components (e)

### (1) Kind

As blending components (e), it is also preferable to blend various additives for achieving various purposes, which are compounds other than the above-mentioned blending components (a) to (d).

For example, as the various additives, in order to further improve friction properties, it is preferable to blend at least one of a modified polyolefin resin; lubricating oils such as mineral oil, ester oil, and silicone oil; waxes such as polyethylene wax, oxidized polyethylene wax, ester wax, and partially saponified wax; and solid lubricants such as graphite, boron nitride, molybdenum disulfide, and tungsten disulfide.

Particularly, among oxidized polyethylene waxes, an oxidized polyethylene wax having a melting point of 120°C or higher is preferred from the viewpoint of contributing to uniform miscibility of various blending components even when a relatively small amount is blended, while maintaining mechanical strength, heat resistance, and the like of the sliding member, and further facilitating the adjustment of lubricity, moldability, and the like.

On the other hand, graphite is a suitable blending component (e) from the viewpoint that it is relatively easy to adjust lubricity, moldability, electrical conductivity, concealability, and the like by appropriately changing the blending amount and morphology (average particle size and scale shape) of graphite.

### (2) Blending amount

Furthermore, when graphite or the like is blended as the blending component (e), it is preferable that the blending amount thereof usually has a value within the range of 1 to 50 parts by weight with respect to 100 parts by weight of the resin component as the blending component (a) .

The reason for this is that although it depends on the kind of the blending component (e), when the blending amount has a value of below 1 part by weight, the blending effects, particularly the effects of friction properties, lubricity, and the like, may not be exhibited.

On the other hand, it is because when the blending amount of the blending component (e) has a value exceeding 50 parts by weight, it may be difficult to uniformly mix the blending component (e) with the resin component as the blending component (a), or conversely, it may be difficult to adjust lubricity, moldability, electrical conductivity, concealability, and the like.

Therefore, it is more preferable that the blending amount of the blending component (e) has a value within the range of 1.5 to 30 parts by weight, and even more preferably a value within the range of 2 to 10 parts by weight, with respect to 100 parts by weight of the resin component as the blending component (a).

### [Fourth embodiment]

A fourth embodiment is a sliding member including carbon fiber for a sliding material that is blended into a resin composition for a sliding material to be formed into a sliding member by predetermined processing, the carbon fiber for a sliding material having a 5% weight loss temperature having a value within a range of 400 to 550°C as determined by thermogravimetry, in which the resin composition for a sliding material contains the following blending components (a) to (c), or blending components (a), (b), and (d), or blending components (a) to (d):
(a) 100 parts by weight of a resin component;
(b) 10 to 400 parts by weight of uncarbonized carbon fiber having a 5% weight loss temperature of 400 to 550°C;
(c) 10 to 80 parts by weight of an inorganic material; and
(d) 10 to 80 parts by weight of a lubricating additive.

### 4. Property 1 (linear expansion coefficient)

The linear expansion coefficients of sliding members in a case where the resin composition for a sliding material includes a predetermined amount of an inorganic material as the blending component (c) as well as in a case where the resin composition for a sliding material substantially does not include an inorganic material, could be each measured using a thermomechanical analyzer (TMA) under the following predetermined conditions.

That is, a square-shaped test piece having a thickness of 3 mm and a length of 5 mm on each side is produced by molding processing, the square-shaped test piece is heated from 25 to 100°C at a rate of 5°C/min using a TMA, the amount of change in the length of the square-shaped test piece is measured, and the linear expansion coefficient in the thickness direction (MD) of the resin at 35 to 80°C is determined as the linear expansion coefficient.

Usually, the linear expansion coefficient is preferably 10×10⁻⁵/°C or less.

The reason for this is that when the linear expansion coefficient exceeds 10×10⁻⁵/°C, the desired dimensional accuracy could not be maintained by sliding heat, and the sliding properties and durability in the sliding member may be notably deteriorated.

However, when the linear expansion coefficient is excessively small, the kind, morphology, blending amount, and the like of the resin component, inorganic material, uncarbonized carbon fiber, and the like that could be selected may be excessively limited.

Therefore, it is more preferable that the linear expansion coefficient of the sliding member has a value within the range of 1×10⁻⁵/°C to 5×10⁻⁵/°C, and even more preferably a value within the range of 2×10⁻⁵/°C to 4.5×10⁻⁵/°C.

Here, referring to Fig. 1A again, the relationship between the firing temperature of carbon fiber (including uncarbonized carbon fiber and other carbon fiber) and the linear expansion coefficient when the carbon fiber is processed into a predetermined sliding member, will be described.

That is, the axis of abscissa in Fig. 1A represents the firing temperature (°C) of carbon fiber, and the axis of ordinate shows the relationship with the linear expansion coefficient (1×10⁻⁵/°C) obtained when a resin composition for a sliding material prepared by blending carbon fiber that has been fired at a predetermined temperature, is processed into a sliding member.

Each data of the characteristic curve in Fig. 1A is based on the linear expansion coefficients of Examples 1 to 3 and Comparative Examples 1 and 2, in which the kinds and blending amounts of the blending components (a) to (d) are the same, and only the firing temperature of carbon fiber is different, as will be described below.

As can be understood from the characteristic curve described in Fig. 1A, it is understood that at the firing temperature (°C) of carbon fiber, there is no significant influence on the linear expansion coefficient in the predetermined sliding member.

### 5. Property 2 (friction coefficient)

Furthermore, the friction coefficients of the sliding members in a case where the resin composition for a sliding material includes a predetermined amount of an inorganic material as the blending component (c) as well as in a case where the resin composition for a sliding material substantially does not include an inorganic material, can be measured according to JIS K 7218:1986 using a thrust unidirectional rotation method under the following conditions.
Sliding speed: 90 m/min
Load (surface pressure): 10 kg/cm²
Testing time: 20 hours
Test piece: Square plate having a size of 30 mm (breadth) × 30 mm (longitudinal width) × 3 mm (thickness)
Mating material: Hollow cylindrical shape (made of SUS304, inner diameter 20 mm, outer diameter 25.6 mm, length 15 mm, surface roughness Ra 0.1)
Lubrication conditions: No lubrication

It is usually suitable that the friction coefficient has a value of 0.4 or less.

The reason for this is that when the friction coefficient exceeds 0.4, the sliding properties and durability of the sliding member may be notably deteriorated.

However, although it may vary depending on the purpose, morphology, and the like of the sliding member, it is more preferable that the friction coefficient has a value within the range of 0.01 to 0.2, and even more preferably a value within the range of 0.03 to 0.1.

Furthermore, Fig. 1B is a figure for describing the relationship between the firing temperature of carbon fiber (including uncarbonized carbon fiber and other carbon fiber) and the friction coefficient in a case where the carbon fiber is processed into a sliding member.

That is, the axis of abscissa in Fig. 1B represents the firing temperature (°C) of carbon fiber, and the axis of ordinate shows the relationship with the friction coefficient (-) obtained when a resin composition for a sliding material prepared by blending carbon fiber that has been fired at a predetermined temperature, is processed into a sliding member.

Each data of the characteristic curve in Fig. 1B is based on the friction coefficients of the carbon fibers used in Examples 1 to 3 and Comparative Examples 1 and 2, in which the kinds and blending amounts of the blending components (a) to (d) are respectively the same, and only the firing temperature is different, as will be described below.

As can be understood from the characteristic curve described in Fig. 1B, as the firing temperature of the carbon fiber is lower, the friction coefficient in the predetermined sliding member tends to decrease.

More specifically, it is understood that when the firing temperature of the carbon fiber is about 1250°C, the friction coefficient in the predetermined sliding member could be adjusted to a value of 0.4 or less, and when the firing temperature of the carbon fiber is about 800°C, the friction coefficient could be adjusted to a value of 0.1 or less.

### 6. Property 3 (endurance time)

Furthermore, the endurance time as a measure for the sliding properties of a sliding member can be measured using the above-mentioned thrust unidirectional rotation method.

Usually, as a measure for satisfactory sliding properties, it is suitable that the endurance time of the sliding member is 10 hours or longer.

However, although it may vary depending on the purpose, morphology, and the like of the sliding member, it is more preferable that the endurance time is 15 hours or longer, and even more preferably 20 hours or longer.

### 7. Property 4 (wear amount)

Furthermore, the wear amount as another measure for the sliding properties of a sliding member can be measured using the above-mentioned thrust unidirectional rotation method.

That is, the thrust unidirectional rotation method is performed for a predetermined time (20 hours), after a lapse of 20 hours, the change in thickness is calculated from the initial value of a test piece formed from a sliding member, and the change in thickness could be taken as the wear amount.

Usually, as a measure for satisfactory sliding properties, it is suitable that the wear amount of the test piece is 100 µm or less.

However, although it may vary depending on the purpose, morphology, and the like of the sliding member, it is more preferable that the wear amount of the test piece is 80 µm or less, and even more preferably 50 µm or less.

When a melting phenomenon is recognized in the test piece before 20 hours have elapsed, the test according to the thrust unidirectional rotation method is terminated at that time point, the change in thickness is calculated from the initial value of the test piece formed from the sliding member, and the change in thickness is taken as the wear amount.

Fig. 1C is a figure for describing the relationship between the firing temperature of carbon fiber (including uncarbonized carbon fiber and other carbon fiber) and the wear amount under predetermined conditions in a case where a sliding member including the carbon fiber is processed.

That is, the axis of abscissa in Fig. 1C represents the firing temperature (°C) of carbon fiber, and the axis of ordinate indicates the relationship with the wear amount (µm) under the above-mentioned measurement conditions in a case where a resin composition for a sliding material prepared by blending carbon fiber that has been fired at a predetermined temperature, is processed into a sliding member.

Each data of the characteristic curve in Fig. 1C is based on the wear amounts of Examples 1 to 3 and Comparative Examples 1 and 2, in which the kinds and blending amounts of the blending components (a) to (d) are respectively the same, and only the firing temperature of carbon fiber is different, as will be described below.

As can be understood from the characteristic curve in Fig. 1C, as the firing temperature (°C) of the carbon fiber increases, the wear amount tends to decrease for the moment and then increase.

More specifically, when the firing temperature (°C) of the carbon fiber is below 600°C, the wear amount has a value exceeding 100 µm; however, the wear amount is 100 µm or less at 600°C and has a value exceeding 100 µm again when the temperature exceeds 800°C.

Therefore, when the results of the characteristic curves shown in Figs. 1A to 1C are taken together into consideration, it could be said that by adjusting the firing temperature (°C) of carbon fiber to a predetermined range (800°C or lower, particularly 600 to 800°C), when the resin composition for a sliding material is processed into a sliding member, the friction coefficient and the wear amount, which are sliding properties, could be adjusted to be equal to or less than predetermined values while maintaining the linear expansion coefficient low.

### EXAMPLES

Hereinafter, the invention will be described in detail based on Examples. However, the scope of rights of the invention is not to be narrowed by the description of Examples without any particular reason.

Furthermore, the resin as the blending component (a), the carbon fiber for a sliding material as the blending component (b), the inorganic material as the blending component (c), and the lubricating additive and the like as the blending component (d) used in the Examples are as follows.
(A) Blending component (a)
   (A-1) Polyphenylene sulfide resin (PPS resin) (manufactured by Polyplastics Co., Ltd., trade name "DURAFIDE", PPS resin: linear construction)
   (A-2) Polyether ether ketone resin (PEEK resin) (manufactured by Solvay Specialty Polymers USA, LLC, trade name "KETASPIRE")
   (A-3) Polyether sulfone resin (PES resin) (manufactured by SUMITOMO CHEMICAL COMPANY, LIMITED, trade name "SUMIKAEXCEL"
(B) Blending component (b)
   (B-1) Isotropic pitch uncarbonized carbon fiber 1 (firing temperature: 700°C, firing time: 30 minutes, average diameter: 15 µm, average length: 200 µm, saturated moisture percentage: 5.8% by weight)
   (B-2) Isotropic pitch uncarbonized carbon fiber 2 (firing temperature: 650°C, firing time: 30 minutes, average diameter: 15 µm, average length: 200 µm, saturated moisture percentage: 5.5% by weight)
   (B-3) Isotropic pitch uncarbonized carbon fiber 3 (firing temperature: 750°C, firing time: 30 minutes, average diameter: 15 µm, average length: 200 µm, saturated moisture percentage: 6.5% by weight)
(B') Carbon fiber corresponding to blending component (b)
   (B'-1) Isotropic pitch carbon fiber 1 (firing temperature: 450°C, firing time: 30 minutes, average diameter: 15 µm, average length: 200 µm, saturated moisture percentage: 8.5% by weight)
   (B'-2) Isotropic pitch carbon fiber 2 (firing temperature: 1300°C, firing time: 30 minutes, average diameter: 15 µm, average length: 200 µm, saturated moisture percentage: 0.5% by weight)
(C) Blending component (c)
   (C-1) Talc (manufactured by NIPPON TALC CO., LTD., trade name "MS-P", average particle size: 14 µm)
   (C-2) Mica (manufactured by YAMAGUCHI MICA CO., LTD., trade name "J-31M", average particle size: 23 µm)
(D) Blending component (d)
   (D-1) Polytetrafluoroethylene (PTFE) (manufactured by AGC Inc., trade name "FLUON (registered trademark) PTFE", average particle size: 5 µm)
   (D-2) Perfluoroalkoxy alkane (PFA) (manufactured by Daikin Industries, Ltd., trade name "NEOFLON", average particle size: 5 µm)
   (D-3) Ethylene-tetrafluoroethylene copolymer (ETFE) (manufactured by AGC Inc., trade name "FLUON (registered trademark) ETFE", average particle size: 5 µm)

### [Example 1]

### 1. Production of resin composition for a sliding material and member for evaluation

### (1) Production of resin composition for a sliding material

As shown in Table 1, 100 parts by weight (pbw) of B-1 as the carbon fiber for a sliding material of the blending component (b), 30 parts by weight of C-1 as the inorganic material of the blending component (c), and 30 parts by weight of D-1 as the lubricating additive of the blending component (d) were weighed with respect to 100 parts by weight of a PPS resin as A-1, which is the resin component of the blending component (a), and the components were accommodated in a predetermined container with a stirrer.

Furthermore, as shown in Table 2, it was separately verified using TGA that only for the carbon fiber for a sliding material of the blending component (b), the TG5 was 450°C.

In addition, it was separately verified by XPS elemental analysis that the amount of carbon on the surface of the carbon fiber for a sliding material of the blending component (b) was 93% by weight.

Next, the blending components (a) to (d) were stirred to become uniform using a mixer having a capacity of 20 L as a stirrer under the conditions of a speed of rotation of 400 rpm for 90 seconds, and a resin composition for a sliding material was obtained.

Next, the obtained resin composition for a sliding material was dried using a heating furnace heated to 130°C in the atmosphere, and a resin composition for a sliding material (powder form) having a moisture percentage of 0.01% by weight or less was obtained.

Next, the obtained resin composition for a sliding material (powder form) was melt kneaded using a twin-screw extruder, and a composition in a pellet form was obtained.

### (2) Production of member for evaluation

The obtained resin composition for a sliding material (pellet form) was charged into a predetermined mold using an injection molding apparatus, and then a member for evaluation A pressure-molded into a plate shape having a size of 5 mm (breadth) × 5 mm (longitudinal width) × 3 mm (thickness) and a member for evaluation B pressure-molded into a plate shape having a size of 30 mm (breadth) × 30 mm (longitudinal width) × 3 mm (thickness), both under predetermined pressurization conditions (for example, 10 to 200 MPa), were obtained.

Those members for evaluation are substitute members for evaluating various characteristics in a sliding member obtained by processing the resin composition for a sliding material, and among the members for evaluation, the member for evaluation A is used in Evaluation 6 (linear expansion coefficient) that will be described below, while the member for evaluation B is used in Evaluation 7 (friction coefficient), Evaluation 8 (endurance time), and Evaluation 9 (wear amount) that will be described below.

### 2. Evaluation of resin composition for a sliding material and sliding member

### (1) Evaluation 1 (firing temperature)

The firing temperature of carbon fiber was evaluated according to the following evaluation criteria. The results are shown in Table 2 as Eva 1.
⊙ (Very good): The temperature is 650 to 750°C.
○ (Good): The temperature is 600 to below 650°C, or above 750 to 800°C.
△ (Fair): The temperature is 500 to below 600°C, or above 800 to 1000°C.
× (Bad): The temperature is below 500°C or above 1000°C.

### (2) Evaluation 2 (tensile modulus)

The tensile modulus of carbon fiber was measured according to JIS R 7606:2000 and evaluated according to the following evaluation criteria. The results are shown in Table 2 as Eva 2.
⊙(Very good): The tensile modulus is 15 to 25 GPa.
○(Good): The tensile modulus is 10 to below 15 GPa, or above 25 to 35 GPa.
△(Fair): The tensile modulus is 1 to below 10 GPa, or above 35 to 50 GPa.
×(Bad): The tensile modulus is below 1 GPa, or above 50 GPa.

### (3) Evaluation 3 (tensile elongation)

The tensile elongation of carbon fiber was measured according to JIS R 7606:2000 and evaluated according to the following evaluation criteria. The results are shown in Table 2 as Eva 3.
⊙(Very good): The tensile elongation is 2.3 to 4%.
○(Good): The tensile elongation is 2% to below 2.3%, or above 4 to 5%.
△(Fair): The tensile elongation is 1.5% to below 2%, or above 5 to 6%.
×(Bad): The tensile elongation is below 1.5% or above 6%.

### (4) Evaluation 4 (volume resistivity)

The volume resistivity of carbon fiber was measured by a four-terminal method using a digital voltmeter and evaluated according to the following evaluation criteria. The results are shown in Table 2 as Eva 4.
⊙(Very good): The volume resistivity is 5×10° to 1×10³ ohm·cm.
○(Good): The volume resistivity is 1×10⁰ to below 5×10⁰ ohm·cm, or above 1×10³ to 1×10⁴ ohm·cm.
△(Fair): The volume resistivity is 1×10⁻¹ to below 1×10⁰ ohm·cm, or above 1×10⁴ to 1×10⁵ ohm·cm.
× (Bad) : The volume resistivity is below 1×10⁻¹ ohm·cm or above 1×10⁵ ohm·cm.

### (5) Evaluation 5 (TG5)

The TG5 (5% weight loss temperature) of carbon fiber was measured using a TGA (manufactured by Mettler-Toledo International, Inc., product name "TGA/SDTA851e") under the conditions of an air flow rate of 100 ml/min and a temperature increase rate of 5°C/min, and was evaluated according to the following evaluation criteria. The results are shown in Table 2 as Eva 5.
⊙(Very good): The TG5 is 430 to 500°C.
○(Good): The TG5 is 400 to below 430°C, or above 500 to 550°C.
△(Fair): The TG5 is 350 to below 400°C, or above 550 to 600°C.
×(Bad): The TG5 is below 350°C, or above 600°C.

### (6) Evaluation 6 (linear expansion coefficient)

The linear expansion coefficient of a resin molded article as a sliding member was measured for the member for evaluation A using a thermomechanical analyzer (manufactured by Mettler-Toledo International, Inc., product name "TMA/SDTA841e"), and was evaluated according to the following evaluation criteria. The results are shown in Table 2 as Eva 6.
⊙(Very good): The linear expansion coefficient is 4.5×10⁻⁵/°C or less.
○(Good): The linear expansion coefficient is 5×10⁻⁵/°C or less.
△(Fair): The linear expansion coefficient is 1×10⁻⁴/°C or less.
×(Bad): The linear expansion coefficient is above 1×10⁻⁴/°C.

### (7) Evaluation 7 (friction coefficient)

The friction coefficient as one of the measures of the sliding properties of a sliding member was measured for the member for evaluation B according to JIS K 7218:1986 using the above-mentioned thrust unidirectional rotation method under the above-mentioned predetermined conditions, and then was evaluated according to the following evaluation criteria. The results are shown in Table 2 as Eva 7.
⊙(Very good): The friction coefficient is 0.05 or less.
○(Good): The friction coefficient is 0.1 or less.
△(Fair): The friction coefficient is 0.4 or less.
×(Bad): The friction coefficient is above 0.4.

### (8) Evaluation 8 (endurance time)

The endurance time as one of the measures of the sliding properties of a sliding member was measured for the member for evaluation B according to JIS K 7218:1986 using the above-mentioned thrust unidirectional rotation method, and was evaluated according to the following evaluation criteria. The results are shown in Table 2 as Eva 8.
⊙(Very good): The melting phenomenon was not observed over a period of 20 hours.
○(Good): The melting phenomenon was not observed over a period of 10 hours or more.
△(Fair): The melting phenomenon was not observed over a period of 1 hour or more.
×(Bad): The melting phenomenon was observed in below 1 hour.

### (9) Evaluation 9 (wear amount)

The wear amount as one of the measures of the sliding properties of a sliding member was measured for the member for evaluation B according to JIS K 7218:1986 after a lapse of 20 hours using the above-mentioned thrust unidirectional rotation method, and the wear amount was evaluated according to the following evaluation criteria. The results are shown in Table 2 as Eva 9.

When the melting phenomenon was recognized in the member for evaluation before 20 hours had elapsed, the test according to the thrust unidirectional rotation method was terminated at that time point, the change in thickness was calculated from the initial value of the member for evaluation, and the change in thickness was taken as the wear amount.
⊙(Very good): The wear amount is 50 µm or less.
○(Good): The wear amount is 80 µm or less.
△(Fair): The wear amount is 100 µm or less.
×(Bad): The wear amount is above 100 µm.

### [Examples 2 and 3]

In Examples 2 and 3, resin compositions for a sliding material and members for evaluations were produced in the same manner as in Example 1, except that B-2 and B-3 were used for the uncarbonized carbon fiber as the blending component (b), and each of them was evaluated. The obtained evaluation results and the like are shown in Table 1 and Table 2.

As shown in Table 2, it was separately verified using a TGA that only for the uncarbonized carbon fiber of the blending component (b), the TG5 values were 440 and 460°C, respectively.

In addition, it was separately verified by XPS elemental analysis that the amounts of carbon on the surface of the uncarbonized carbon fiber as the blending component (b) were 90% by weight and 95% by weight, respectively.

### [Examples 4 and 5]

In Examples 4 and 5, resin compositions for a sliding material and members for evaluation were produced in the same manner as in Example 1, except that the blending amounts of the uncarbonized carbon fiber of the blending component (b) were changed to 50 parts by weight and 150 parts by weight, respectively, with respect to 100 parts by weight of the resin component as the blending component (a), and each of them was evaluated. The obtained evaluation results and the like are shown in Table 1 and Table 2.

### [Examples 6 and 7]

In Examples 6 and 7, resin compositions for a sliding material and members for evaluation were produced in the same manner as in Example 1, except that the kind of the resin component of the blending component (a) was changed to A-2 and A-3, respectively, and each of them was evaluated. The obtained evaluation results and the like are shown in Table 1 and Table 2.

### [Examples 8 and 9]

In Examples 8 and 9, resin compositions for a sliding material and members for evaluation were produced in the same manner as in Example 1, except that the kind of the inorganic material of the blending component (c) was changed to C-2 and a mixture of C-1/C-2 (mixing weight ratio: 80/20), respectively, and each of them was evaluated. The obtained evaluation results and the like are shown in Table 1 and Table 2.

### [Examples 10 and 11]

In Examples 10 and 11, resin compositions for a sliding material and members for evaluation were produced in the same manner as in Example 1, except that the blending amounts of the inorganic material of the blending component (c) were changed to 60 parts by weight and 0 parts by weight, respectively, with respect to 100 parts by weight of the resin component of the blending component (a), and each of them was evaluated. The obtained evaluation results and the like are shown in Table 1 and Table 2.

### [Examples 12 and 13]

In Examples 12 and 13, resin compositions for a sliding material and members for evaluation were produced in the same manner as in Example 1, except that the blending amounts of the lubricating additive of the blending component (d) were changed to 60 parts by weight and 0 parts by weight, respectively, with respect to 100 parts by weight of the resin component of the blending component (a), and each of them was evaluated. The obtained evaluation results and the like are shown in Table 1 and Table 2.

### [Examples 14 and 15]

In Examples 14 and 15, resin compositions for a sliding material and members for evaluation were produced in the same manner as in Example 1, except that the kind of the lubricating additive as the blending component (d) were changed to D-2 and D-3, respectively, and each of them was evaluated. The obtained evaluation results and the like are shown in Table 1 and Table 2.

### [Comparative examples 1 and 2]

In Comparative Examples 1 and 2, resin compositions for a sliding material and sliding members were produced in the same manner as in Example 1, except that the carbon fiber corresponding to the blending component (b) was changed to B'-1 and B'-2, respectively, and each of them was evaluated. The obtained evaluation results and the like are shown in Table 1 and Table 2.

As shown in Table 2, it was separately verified using a TGA that only for the carbon fiber corresponding to the blending component (b), the TG5 values were 390 and 560°C, respectively.

In addition, it was separately verified by XPS elemental analysis that the amounts of carbon on the surface of the carbon fiber corresponding to the blending component (b) were 84% by weight and 97% by weight, respectively.

### [Comparative Examples 3 and 4]

In Comparative Examples 3 and 4, resin compositions for a sliding material and members for evaluation were produced in the same manner as in Example 1, except that the blending amount of the uncarbonized carbon fiber of the blending component (b) was changed to 5 parts by weight and 450 parts by weight, respectively, with respect to 100 parts by weight of the resin component of the blending component (a), and each of them was evaluated. The obtained evaluation results and the like are shown in Table 1 and Table 2.

**[Table 1]**

| | Blending component (a) | | Blending component (b) | | | Blending component (c) | | Blending component (d) | |
|---|---|---|---|---|---|---|---|---|---|
| | Kind | Blending amount (pbw) | Kind | Firing temperature (°C) | Blending amount (pbw) | Kind | Blending amount (pbw) | Kind | Blending amount (pbw) |
| Example 1 | A-1 | 100 | B-1 | 700 | 100 | C-1 | 30 | D-1 | 30 |
| Example 2 | A-1 | 100 | B-2 | 650 | 100 | C-1 | 30 | D-1 | 30 |
| Example 3 | A-1 | 100 | B-3 | 750 | 100 | C-1 | 30 | D-1 | 30 |
| Example 4 | A-1 | 100 | B-1 | 700 | 50 | C-1 | 30 | D-1 | 30 |
| Example 5 | A-1 | 100 | B-1 | 700 | 150 | C-1 | 30 | D-1 | 30 |
| Example 6 | A-2 | 100 | B-1 | 700 | 100 | C-1 | 30 | D-1 | 30 |
| Example 7 | A-3 | 100 | B-1 | 700 | 100 | C-1 | 30 | D-1 | 30 |
| Example 8 | A-1 | 100 | B-1 | 700 | 100 | C-2 | 30 | D-1 | 30 |
| Example 9 | A-1 | 100 | B-1 | 700 | 100 | C-1/C-2 | 30 | D-1 | 30 |
| Example 10 | A-1 | 100 | B-1 | 700 | 100 | C-1 | 60 | D-1 | 30 |
| Example 11 | A-1 | 100 | B-1 | 700 | 100 | C-1 | 0 | D-1 | 30 |
| Example 12 | A-1 | 100 | B-1 | 700 | 100 | C-1 | 30 | D-1 | 60 |
| Example 13 | A-1 | 100 | B-1 | 700 | 100 | C-1 | 30 | D-1 | 0 |
| Example 14 | A-1 | 100 | B-1 | 700 | 100 | C-1 | 30 | D-2 | 30 |
| Example 15 | A-1 | 100 | B-1 | 700 | 100 | C-1 | 30 | D-3 | 30 |
| Comparative Example 1 | A-1 | 100 | B'-1 | 450 | 100 | C-1 | 30 | D-1 | 30 |
| Comparative Example 2 | A-1 | 100 | B'-2 | 1300 | 100 | C-1 | 30 | D-1 | 30 |
| Comparative Example 3 | A-1 | 100 | B-1 | 700 | 5 | C-1 | 30 | D-1 | 30 |
| Comparative Example 4 | A-1 | 100 | B-1 | 700 | 450 | C-1 | 30 | D-1 | 30 |

**[Table 2]**

| | Tensile modulus (GPa) | Tensile elongation (%) | Volume resistivity (ohm·cm) | TG5 (°C) | Linear expansion coefficient (1×10⁻⁵/°C) | Friction coefficient (-) | Endurance time (h) | Wear amount (µm) | Eva 1 | Eva 2 | Eva 3 | Eva 4 | Eva 5 | Eva 6 | Eva 7 | Eva 8 | Eva 9 |
|---|---|---|---|---|---|---|---|---|---|---|---|---|---|---|---|---|---|
| Example 1 | 18 | 2.2 | 1×10² | 450 | 4.45 | 0.04 | 20 | 30 | ⊙ | ⊙ | ○ | ⊙ | ⊙ | ⊙ | ⊙ | ⊙ | ⊙ |
| Example 2 | 16 | 2.3 | 1×10³ | 440 | 4.5 | 0.05 | 20 | 60 | ⊙ | ⊙ | ⊙ | ⊙ | ⊙ | ⊙ | ⊙ | ⊙ | ○ |
| Example 3 | 20 | 2.1 | 1×10¹ | 460 | 4.4 | 0.045 | 20 | 45 | ⊙ | ⊙ | ○ | ⊙ | ⊙ | ⊙ | ⊙ | ⊙ | ⊙ |
| Example 4 | 18 | 2.2 | 1×10² | 450 | 4.7 | 0.05 | 20 | 55 | ⊙ | ⊙ | ○ | ⊙ | ⊙ | ○ | ⊙ | ⊙ | ○ |
| Example 5 | 18 | 2.2 | 1×10² | 450 | 3.9 | 0.04 | 20 | 40 | ⊙ | ⊙ | ○ | ⊙ | ⊙ | ⊙ | ⊙ | ⊙ | ⊙ |
| Example 6 | 18 | 2.2 | 1×10² | 450 | 3.8 | 0.09 | 20 | 90 | ⊙ | ⊙ | ○ | ⊙ | ⊙ | ⊙ | ○ | ⊙ | △ |
| Example 7 | 18 | 2.2 | 1×10² | 450 | 3.6 | 0.045 | 20 | 45 | ⊙ | ⊙ | ○ | ⊙ | ⊙ | ⊙ | ⊙ | ⊙ | ⊙ |
| Example 8 | 18 | 2.2 | 1×10² | 450 | 4.5 | 0.045 | 20 | 60 | ⊙ | ⊙ | ○ | ⊙ | ⊙ | ⊙ | ⊙ | ⊙ | ○ |
| Example 9 | 18 | 2.2 | 1×10² | 450 | 4.3 | 0.055 | 20 | 65 | ⊙ | ⊙ | ○ | ⊙ | ⊙ | ⊙ | ○ | ⊙ | ○ |
| Example 10 | 18 | 2.2 | 1×10² | 450 | 4.8 | 0.05 | 20 | 60 | ⊙ | ⊙ | ○ | ⊙ | ⊙ | ○ | ⊙ | ⊙ | ○ |
| Example 11 | 18 | 2.2 | 1×10² | 450 | 4.4 | 0.1 | 20 | 95 | ⊙ | ⊙ | ○ | ⊙ | ⊙ | ⊙ | ○ | ⊙ | Δ |
| Example 12 | 18 | 2.2 | 1×10² | 450 | 4.4 | 0.03 | 20 | 50 | ⊙ | ⊙ | ○ | ⊙ | ⊙ | ⊙ | ⊙ | ⊙ | ⊙ |
| Example 13 | 18 | 2.2 | 1×10² | 450 | 4.4 | 0.05 | 20 | 35 | ⊙ | ⊙ | ○ | ⊙ | ⊙ | ⊙ | ⊙ | ⊙ | ⊙ |
| Example 14 | 18 | 2.2 | 1×10² | 450 | 4.4 | 0.05 | 20 | 50 | ⊙ | ⊙ | ○ | ⊙ | ⊙ | ⊙ | ⊙ | ⊙ | ⊙ |
| Example 15 | 18 | 2.2 | 1×10² | 450 | 4.4 | 0.06 | 20 | 70 | ⊙ | ⊙ | ○ | ⊙ | ⊙ | ⊙ | ○ | ⊙ | ○ |
| Comparative Example 1 | 0. 5 | 0.4 | 5×10⁴ | 390 | 4.4 | 0.045 | 4 | 250 | × | × | × | Δ | Δ | ⊙ | ⊙ | Δ | × |
| Comparative Example 2 | 38 | 1.9 | 5x10⁻² | 560 | 4.5 | 0.42 | 0.8 | 350 | × | Δ | Δ | × | Δ | ⊙ | × | × | × |
| Comparative Example 3 | 18 | 2.2 | 1×10² | 450 | 5.7 | 0.048 | 20 | 135 | ⊙ | ⊙ | ○ | ⊙ | ⊙ | Δ | ⊙ | ⊙ | × |
| Comparative Example 4 | 18 | 2.2 | 1×10² | 450 | 4 | 0.55 | 2 | 230 | ⊙ | ⊙ | ○ | ⊙ | ⊙ | ⊙ | × | Δ | × |

| | | | | | | | | | | | | | | | | | |
|---|---|---|---|---|---|---|---|---|---|---|---|---|---|---|---|---|---|
| *Eva 1: Firing temperature *Eva 2: Tensile modulus *Eva 3: Tensile elongation *Eva 4: Volume resistivity *Eva 5: TG5 *Eva 6: Linear expansion coefficient *Eva 7: Friction resistance *Eva 8: Endurance time *Eva 9: Wear amount | | | | | | | | | | | | | | | | | |

### INDUSTRIAL APPLICABILITY

As described above, a sliding member which has a lower friction coefficient, wear amount, and the like and has excellent sliding properties and the like without damaging the mating material, when the carbon fiber for a sliding material of the invention and the like are blended with a resin component, and the mixture is processed into a sliding member by way of a resin composition for a sliding material, could be provided.

Particularly, the resin composition for a sliding material obtained by blending the carbon fiber for a sliding material of the invention and the like includes a predetermined amount of a predetermined inorganic material, and when the resin composition for a sliding material is processed into a sliding member, a sliding member having excellent sliding properties and the like could be provided.

On the other hand, even when the resin composition for a sliding material obtained by blending the carbon fiber for a sliding material of the invention and the like substantially does not include a predetermined inorganic material, in a case where the resin composition for a sliding material is processed into a sliding member, it may vary depending on the kind of the mating material and the like, a sliding member having a relatively lower friction coefficient and having excellent sliding properties and durability could be provided.

Therefore, the carbon fiber for a sliding material of the invention could be used in a wide range of fields, in sliding members for submersible pumps and the like having low friction properties and excellent wear resistance and as machine parts including the sliding members, by way of a resin composition for a sliding material including the carbon fiber for a sliding material.

That is, the carbon fiber for a sliding material is expected to be widely used as a sliding member of submersible pumps for performing the circulation of coolants for automotive engines, inverters, batteries, fuel cells, or the like; the circulation of drug solutions, solvents, oils, beverages, and the like; and the circulation of hot water in water heaters, floor heating equipment, and the like, as well as other liquid pumps.

As an example, assuming a bearing for a submersible pump as a use application, when there is sufficient water on the sliding surface, the sliding surface is in a state close to fluid lubrication, and satisfactory sliding properties are obtained; however, in the early stages of pump operation, since the bearing and the mating shaft are subjected to friction in a dry state, satisfactory sliding properties are required even under dry conditions.

In this regard, the slide bearing of a water pump according to Patent Document 1 of the prior art includes at least one of polytetrafluoroethylene resin and graphite as a lubricating agent; however, it is insufficient to obtain sliding properties. That is, when the blending proportion of the lubricating agent is increased in order to obtain satisfactory low friction properties even under dry conditions, strength of the bearing itself is decreased, and wear resistance is deteriorated.

On the other hand, when the blending proportion of carbon fiber is increased in order to improve wear resistance, low friction is not obtained, and there are problems such as damaging the mating material.

However, when a sliding member derived from the resin composition for a sliding material of the invention is used, even in a case where the blending proportion of carbon fiber is relatively increased, the above-described problems characteristic of bearings for submersible pumps could be effectively suppressed.

Therefore, the resin composition for a sliding material of the invention and a sliding member derived from such a resin composition for a sliding material are particularly suitable for the use in bearings for submersible pumps, among a wide range of use applications.

## Claims

1. Carbon fiber for a sliding material to be blended into a resin composition for a sliding material that is produced into a sliding member by predetermined processing,
wherein a 5% weight loss temperature determined by thermogravimetry has a value within a range of 400 to 550°C.

2. The carbon fiber for a sliding material according to claim 1, wherein a tensile modulus as measured according to JIS R 7606:2000 has a value within a range of 10 to 35 GPa.

3. The carbon fiber for a sliding material according to claim 1 or 2, wherein a tensile elongation as measured according to JIS R 7606:2000 has a value within a range of 2 to 5%.

4. The carbon fiber for a sliding material according to any one of claims 1 to 3, wherein a saturated moisture percentage as measured according to JIS K 7209:2000 has a value within a range of 1 to 8% by weight.

5. The carbon fiber for a sliding material according to any one of claims 1 to 4, wherein an amount of carbon on a surface as determined by XPS elemental analysis has a value within a range of 85 to 96% by weight with respect to a total amount.

6. The carbon fiber for a sliding material according to any one of claims 1 to 5, wherein a volume resistivity has a value within a range of 1×10⁰ to 1×10⁴ ohm·cm.

7. The carbon fiber for a sliding material according to any one of claims 1 to 6, wherein a resin component in the resin composition for a sliding material is at least one selected from the group consisting of a polyphenylene sulfide resin, a polyether sulfone resin, a polyether ether ketone resin, a polyimide resin, a polyamide resin, a polyacetal resin, a polytetrafluoroethylene resin, a polyketone resin, a thermosetting phenol resin, an epoxy resin, a melamine resin, a diallyl phthalate resin, and an unsaturated polyester resin.

8. A method for producing carbon fiber for a sliding material to be blended into a resin composition for sliding material, the method comprising the following steps (1) and (2) :
(1) a step of preparing raw material fibers of carbon fiber; and
(2) a firing step of firing the raw material fibers of carbon fiber by setting a firing temperature to a value within a range of 600 to 800°C, and adjusting a 5% weight loss temperature as determined by thermogravimetry of resulting carbon fiber for a sliding material to a value within a range of 400 to 550°C.
